(19) Europäisches Patentamt / European Patent Office / Office européen des brevets

(11) **EP 2 840 581 B1**

## (12) EUROPEAN PATENT SPECIFICATION

(45) Date of publication and mention
of the grant of the patent:
**11.01.2017 Bulletin 2017/02**

(21) Application number: **13778527.5**

(22) Date of filing: **12.04.2013**

(51) Int Cl.:
*H01G 7/02* (2006.01)   *H04R 19/01* (2006.01)
*H04R 19/04* (2006.01)   *H04R 31/00* (2006.01)

(86) International application number:
**PCT/JP2013/061130**

(87) International publication number:
**WO 2013/157505 (24.10.2013 Gazette 2013/43)**

(54) **ELECTRET STRUCTURE AND METHOD FOR MANUFACTURING SAME, AND ELECTROSTATIC INDUCTION-TYPE CONVERSION ELEMENT**

ELEKTRETSTRUKTUR UND VERFAHREN ZUR HERSTELLUNG DAVON SOWIE UMWANDLUNGSELEMENT MIT ELEKTROSTATISCHER INDUKTION

STRUCTURE À ÉLECTRET ET SON PROCÉDÉ DE FABRICATION ET ÉLÉMENT DE CONVERSION DU TYPE À INDUCTION ÉLECTROSTATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2012 JP 2012093900**

(43) Date of publication of application:
**25.02.2015 Bulletin 2015/09**

(73) Proprietor: **National University Corporation Saitama University**
**Saitama City, Saitama 338-8570 (JP)**

(72) Inventor: **KAGEYAMA Kensuke**
**Saitama-shi**
**Saitama 338-8570 (JP)**

(74) Representative: **Ward, James Norman et al**
**Haseltine Lake LLP**
**Bürkleinstrasse 10**
**80538 München (DE)**

(56) References cited:
EP-A1- 1 775 992        WO-A1-2010/095554
JP-A- 2004 166 262      JP-A- 2005 045 553
JP-A- 2005 045 553      JP-A- 2005 151 026
JP-A- 2006 287 279      JP-A- 2009 267 649
JP-A- 2013 040 305      JP-A- 2013 075 945
US-A- 4 356 049         US-A1- 2008 258 565

• JACOBS H O ET AL: "Submicrometer patterning of charge in thin-film electrets", SCIENCE, AMERICAN ASSOCIATION FOR THE ADVANCEMENT OF SCIENCE, US, vol. 291, 2 March 2001 (2001-03-02), pages 1763-1766, XP002558179, ISSN: 0036-8075, DOI: 10.1126/SCIENCE.1057061

**Description**

Technical Field

The present invention pertains to an electret-structure or an electret device that manifests heat resistance characteristics and pressure resistance characteristics, which can maintain a high charge retaintivity (a high charge-retention rate), even if the electret-structure is exposed to a high temperature or is brought into strong collision with an insulating layer, and a method for manufacturing the same, and a static-induction conversion element (an electrostatic induction type conversion element), such as an electret condenser microphone (ECM) and the like, which are implemented by the electret-structures.

Background Art

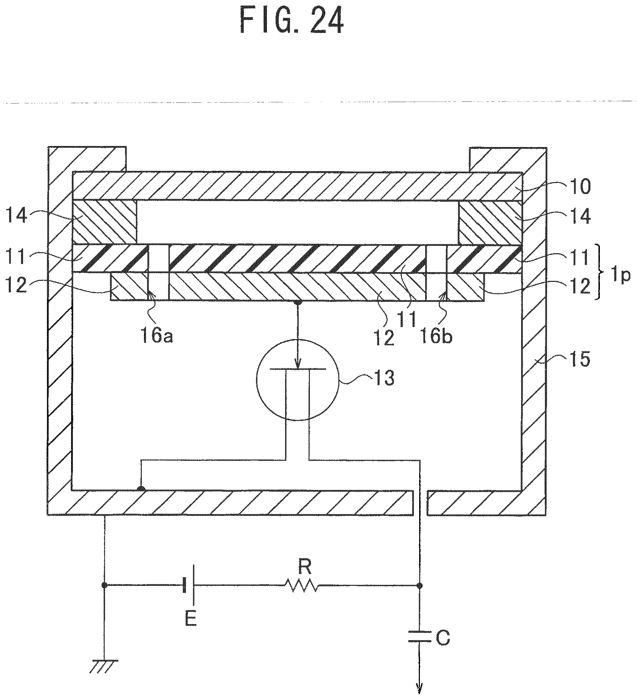

An electret, which continues to keep semi-permanently electrified charges, is widely used not only in the ECMs but also in ultrasonic sensors, acceleration sensors, earthquake gauges, electric-power generation-elements, electret filters and the like. Fig. 24 illustrates one example of a configuration of the ECM. The ECM contains a vibration electrode 10 vibrated by sound pressure, an electret film 11 located opposite to the vibration electrode 10 through a gap held by a spacer ring 14, a back electrode 12 fixed to a back side of the electret film 11, an field effect transistor (FET) 13 for amplifying a signal transmitted from the back electrode 12, and a metallic case 15 electrically connected to the vibration electrode 10.

In the present Specification, assembled device-structures implemented by the electret film 11 and the back electrode 12 integrated with the electret film 11 as illustrated in Fig. 24, or other assembled device-structures similar to the architecture illustrated in Fig. 24 are referred to as "electret-structures".

Apertures 16a and 16b penetrating to a gap space are cut through the electret film 11 and the back electrode 12, so that the vibration of the vibration electrode 10 is not suppressed. Also, the metallic case 15 is electrically grounded, and a direct current power supply E for driving the FET 13 is externally assembled together with a resistor R. A gate electrode of the FET 13 is connected to the back electrode 12, a source electrode is grounded through the metallic case 15, and a drain electrode for transmitting an amplified sound signal is connected through a coupling capacitor C to an external device. Film made of fluorine resin that has high charge retention characteristics is used in the electret film 11. For typical electret materials, fluorine resins such as poly-tetra-fluoro-ethylene (PTFE), per-fluolo-alkoxy ethylene copolymer (PFA), tetra-fluoro-ethylene-hexa-fluoro-propylene copolymer (FEP), poly-chloro-trifluoro-ethylene (PCTFE) and the like are available.

Through a manufacturing process of the ECM, negative charges are injected into the electret film 11 to which the back electrode 12 is attached, by corona-discharge or plasma discharge. Those negative charges are trapped at a surface of and in the inside of the electret film 11. Then, the electret film 11 continues to keep those negative charges. Electric fields are generated from the negative charges trapped in the electret film 11. Thus, a condenser, which does not require an application of a bias voltage from the external, is generated by the vibration electrode 10 and the back electrode 12. When the vibration electrode 10 is vibrated by the sound pressure, an electrostatic capacitance of this condenser is changed. Then, a voltage change, which is caused by the above change between the vibration electrode 10 and the back electrode 12, is amplified by the FET 13 and transferred to the external. Hence, a sound signal can be extracted as an electric signal.

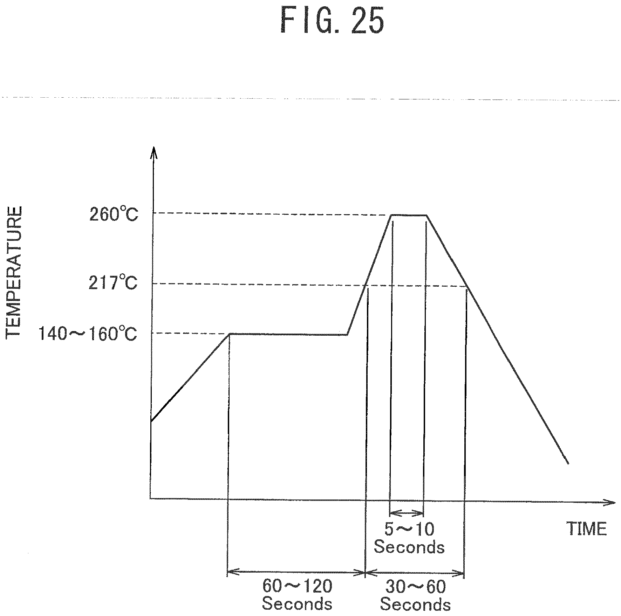

However, the ECM that uses the fluorine-resin film as the electret material has a disadvantage that a reflow-process which uses lead (Pb) free solder cannot be executed when the ECM is assembled to an ECM substrate. Fig. 25 illustrates one example of a temperature profile of the reflow-process for assembling components or parts on the substrate of a mobile telephone or the like. In recent years, from the standpoint of removing harmful substances, the reflow-process which uses the Pb-free solder is executed. However, in this case, the assembled components are held at 217 to 260 degrees Celsius for about 30 to 60 seconds, at the reflow-process, and heated at 260 degrees Celsius for about 5 to 10 seconds. When the fluorine-resin film is exposed to a high temperature exceeding 250 degrees Celsius in this way, the fluorine-resin film cannot hold the trapped negative charges, and most of them are lost.

In order to suppress a deterioration in the charge retaintivity (the charge retention rate) of the fluorine resin at high temperature, an approach to improve the property of the fluorine resin is tried by irradiating radioactive ray (see patent literature (PTL) 1) or by introducing inorganic particles into the fluorine resin (see PTL 2). Also, an ECM in which instead of the fluorine resin, silicon oxide film that has an excellent electrification stability even at a high temperature is used as the electret material is also proposed (see PTL 3). By the way, an inventor of the present invention has proposed in advance an electro-mechanical conversion element in which an electret insulation layer is joined onto an upper surface of an electret layer that has a back electrode on a lower layer, and a vibration electrode insulation film is installed on a lower surface of the vibration electrode, and insulator particles each of which has a particle diameter of ten nanometers to 40 micrometers are placed as spacer between the electret insulation layer and the vibration electrode insulation film (see PTL 4).

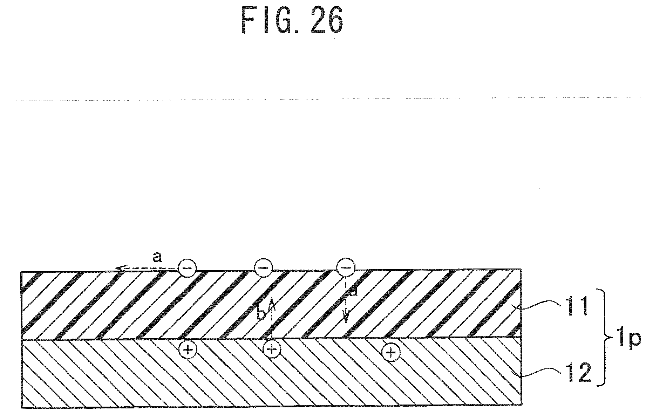

The charge retaintivity of the electret film 11 is decreased by the following reasons at high temperature. As illustrated in Fig. 26, negative charges "a" trapped in the electret film 11 that implements an electret-structure 1p move, through defect levels of the electret film 11, so that a part of the negative charges diffuse to a surface direction of the electret film 11, and the charge retaintivity is decreased. Also, the other part of the trapped negative charges move through the defect levels of the electret film 11 at high temperature and diffuse into a thickness direction of the electret film 11. On the other hand, positive charges "b" induced in the back electrode 12 are injected into the electret film 11 from an interface defect (or, an electric field concentration portion caused by a surface roughness of the back electrode 12) between the back electrode 12 and the electret film 11, and diffused into the thickness direction. When the diffused negative charges and positive charges are coupled to each other, the negative charges are extinguished, and the charge retaintivity is decreased.

Also, PTL 3 describes that a conventional silicon oxide film electret is not enough for a practical use, because its moisture resistance performance is greatly decreased. This is affected by a property of silica whose hydrophilic property is high. Waters in air are adsorbed in the silicon oxide film whose hydrophilic property is high. Then, through the adsorbed water, the positive charge of the electrode is diffused through the surface of the silicon oxide film and coupled to the negative charge, and the negative charge is extinguished.

CITATION LIST

Patent Literature

PTL 1: JP 2006-287279A
PTL 2: JP 2009-253050A
PTL 3: JP 2002-33241A
PTL 4: WO 2009/125773 A1

US 2008/0258565 discloses an electret device including an electret film into which charges are injected and a barrier film provided on a surface of the electret film and having an electron affinity smaller than the electron affinity of the electret film.

**SUMMARY OF INVENTION**

[Technical Problem]

The present invention is contrived by considering the foregoing circumstances. Therefore, an object of the present invention is to provide a new electret-structure that can keep the high charge retaintivity even at high temperature, and a method for manufacturing the electret-structure, and a static-induction conversion element that uses the electret-structure.

[Solution to Problem]

A first aspect of the present invention inheres in an electret-structure encompassing a fluorine-resin film, an electrode formed on one surface of the fluorine-resin film, and a silica layer (silicon oxide, $SiO_x$, x = 1 to 2) formed on another surface of the fluorine-resin film. The silica layer pertaining to the first aspect of the present invention is implemented by a plurality of island-shaped silica regions for covering the fluorine-resin film in a topology such that the island-shaped silica regions are isolated from each other, and negative charges are deposited on the island-shaped silica regions. For example, when the electret-structure of the present invention is adapted for an electret condenser microphone (the ECM), "the electrode" of the electret-structure pertaining to the first aspect may be assigned as either one of "a back electrode" or "a vibration electrode", which implements the electret-structure of the ECM.

The negative charges injected into the island-shaped silica region by the corona-discharge of plasma discharge are captured by deep trap levels of the island-shaped silica region. Thus, even at a reflow temperature, the negative charges never diffuse into the fluorine-resin film. As a result, the diffusion to the surface and thickness directions of the negative charges illustrated in Fig. 26 is not generated. For this reason, the extinction of the negative charges held in the island-shaped silica regions is only the extinction caused by the coupling to positive charges (holes) diffused from the electrode. Thus, the charge retaintivity at high temperature is improved. Moreover, each of the island-shaped silica regions is isolated on the fluorine-resin film whose surface resistivity is high. Thus, at a room temperature, the diffusion to the surface direction of the negative charges illustrated in Fig. 26 is not almost generated. Also, the diffusion of the positive charges from the electrode at the room temperature is shielded by the fluorine-resin film. For this reason, the decrease in the moisture resistance characteristics caused by adsorbed water in the island-shaped silica regions is never generated even under the high temperature.

A second aspect of the present invention inheres in a method for manufacturing an electret-structure having a fluorine-resin film, an electrode formed on one surface of the fluorine-resin film, and a silica layer formed on another surface of the fluorine-resin film, which are explained in the first aspect. The manufacturing method of the electret-structure pertaining to the second aspect encompasses a process of spraying silica sol, in which particles of amorphous silica are dispersed in solvent, onto the another surface of the fluorine-resin film so as to form a plurality of insulating layers arranged on the another surface in a topology such that the plurality of island-shaped silica regions are isolated from each other, and consequently forming the silica layer implemented by the plurality of island-shaped silica regions, and a process of depositing negative charges on the island-shaped silica regions.

A third aspect of the present invention inheres in a method for manufacturing an electret-structure having a fluorine-resin film, an electrode formed on one surface of the fluorine-resin film, and a silica layer formed on another surface of the fluorine-resin film, silica layer formed on the other surface of the fluorine-resin film, which are explained in the first aspect. The manufacturing method of the electret-structure pertaining to the third aspect encompasses a process of forming a plurality of island-shaped silica regions implemented by thin film of amorphous silica or polycrystalline silica on another surface of the fluorine-resin film in a topology such that the plurality of island-shaped silica regions are isolated from each other by physical vapor deposition (PVD) method or chemical vapor deposition (CVD) method so that the silica layer can be formed by the plurality of island-shaped silica regions, and a process of depositing negative charges on the island-shaped silica regions.

A fourth aspect of the present invention inheres in a method for manufacturing an electret-structure having a fluorine-resin film, a silica layer formed on one surface of the fluorine-resin film, and an electrode formed on another surface of the fluorine-resin film, which are explained in the first aspect. The manufacturing method of the electret-structure pertaining to the fourth aspect encompasses a process of forming a plurality of island-shaped silica regions implementing the silica layer on one surface of the fluorine-resin film in a topology such that the plurality of island-shaped silica regions are isolated from each other, and simultaneously with the time when the electrode is adhered on the another surface of the fluorine-resin film, a process of depositing negative charges on the island-shaped silica regions.

A fifth aspect of the present invention inheres in a static-induction conversion element encompassing a fluorine-resin film, a back electrode formed on one surface of the fluorine-resin film, a silica layer formed on another surface of the fluorine-resin film, a vibration electrode arranged opposite to the silica layer on another surface of the fluorine-resin film, and an insulating layer installed on an opposite surface to the silica layer of the vibration electrode. The silica layer of the static-induction conversion element pertaining to the fifth aspect is implemented by a plurality of island-shaped silica regions for covering the fluorine-resin film in a topology such that the plurality of island-shaped silica regions are isolated from each other, and negative charges are deposited on the island-shaped silica regions. In the static-induction conversion element pertaining to the fifth aspect, the vibration electrode is vibrated by sound pressure. Even if the insulating layer on the vibration electrode side collides with the island-shaped silica regions, the negative charges captured by deep trap levels of the island-shaped silica regions do not diffuse into the insulating layer. Thus, deterioration in the ECM can be avoided. For this reason, it is possible to greatly improve the maximum allowable sound pressure of the ECM.

A sixth aspect of the present invention inheres in a static-induction conversion element encompassing a fluorine-resin film, a back electrode formed on one surface of the fluorine-resin film, a silica layer formed on another surface of the fluorine-resin film, and a vibration electrode arranged opposite to the silica layer on another surface of the fluorine-resin film. The silica layer in the static-induction conversion element pertaining to the sixth aspect is implemented by a plurality of island-shaped silica regions for covering the fluorine-resin film in a topology such that the plurality of island-shaped silica regions are isolated from each other. And a distribution density on the fluorine-resin film in the island-shaped silica regions is high in a region facing to a periphery of the vibration electrode and low in a region facing to a center of the vibration electrode. An arrangement of the island-shaped silica regions in the static-induction conversion element pertaining to the sixth aspect can be arbitrarily determined by inkjet printing or screen print. As a surface density of the island-shaped silica regions in the periphery is increased, an electric field in the periphery is higher than that of the center. Thus, an effective area of the ECM is spread to the periphery of the vibration electrode, and a change in an electrostatic capacitance is increased. As a result, it is possible to reduce noise and improve sensitivity.

[Advantageous Effects of Invention]

According to the present invention, it is possible to provide the new electret-structure that can keep the charge retaintivity even at high temperature, and the manufacturing method of the electret-structure, and the static-induction conversion element that uses the electret-structure.

**BRIEF DESCRIPTION OF DRAWINGS**

Fig. 1 is a schematic cross-sectional view illustrating a static-induction conversion element (ECM) pertaining to a first embodiment of the present invention.

Fig. 2 is a plan view illustrating a sample for a measurement test of an electret-structure used in the static-induction conversion element pertaining to the first embodiment.

Fig. 3 is a cross-sectional view schematically illustrating the electret-structure pertaining to the first embodiment.

Fig. 4 is a schematic cross-sectional view illustrating a method of forming a silica-aggregate by using on a spray method, as a manufacturing method of the electret-structure pertaining to the first embodiment.

Fig. 5 is a view illustrating a moisture resistance test of the electret-structure pertaining to the first embodiment.

Fig. 6 is a view illustrating a relation between a product of a cover rate and a cover area and the charge retaintivity of the electret-structure pertaining to the first embodiment.

Fig. 7 is a view illustrating a heating test result of the electret-structure pertaining to the first embodiment.

Fig. 8 is a view illustrating a temperature profile of a temperature increase - temperature decrease, which is used in a heating test to investigate a relation between the cover area and the cover rate of the electret-structure pertaining to the first embodiment.

Fig. 9 is a view illustrating a relation between a holding time and the charge retaintivity of the electret-structure pertaining to the first embodiment, which is obtained as a result of the heating test that uses the temperature profile of the temperature-increase and temperature-decrease in Fig. 8.

Fig. 10 is a view illustrating a relation between the cover area and the charge retaintivity of the electret-structure pertaining to the first embodiment.

Fig. 11 is a view illustrating a change in the charge retaintivity when the electret-structure pertaining to the first embodiment in which a thickness of a fluorine-resin film is reduced to seven micrometers is left at a room temperature.

Fig. 12 is a view illustrating an influence on the charge retaintivity which is caused by a heat treatment for the electret-structure pertaining to the first embodiment.

Fig. 13 is a view illustrating a change in a charge retaintivity r that is caused by the heat treatment for the electret-structure pertaining to the first embodiment, by comparing a sample (symbols of open quadrangle) into which an adhesion defect portion is introduced and a sample (symbols of open circle) whose adhesion is excellent.

Fig. 14 is a view illustrating the change in the charge retaintivity of the electret-structure pertaining to the first embodiment, when a reflow test similar to the temperature-increase and temperature-decrease characteristics in Fig. 8 is repeated, by comparing a sample (symbols of open quadrangle) in which the silica-aggregate exists and a sample (symbols of open circle) in which the silica-aggregate does not exist.

Fig. 15(a) is a schematic cross-sectional view illustrating an electret-structure pertaining to a variation (first variation) in the first embodiment of the present invention in which a disengage protection cover of the island-shaped silica regions is installed, and Fig. 15(b) is a schematic cross-sectional view illustrating an electret-structure pertaining to a second variation of the first embodiment.

Fig. 16 is a schematic cross-sectional view illustrating a static-induction conversion element (ECM) pertaining to a variation (third variation) in the first embodiment of the present invention.

Fig. 17 is a schematic cross-sectional view illustrating a static-induction conversion element (ECM) pertaining to a second embodiment of the present invention.

Fig. 18 is a schematic cross-sectional view illustrating a static-induction conversion element (ECM) pertaining to a third embodiment of the present invention.

Fig. 19 is a schematic cross-sectional view illustrating a static-induction conversion element pertaining to a fourth embodiment of the present invention.

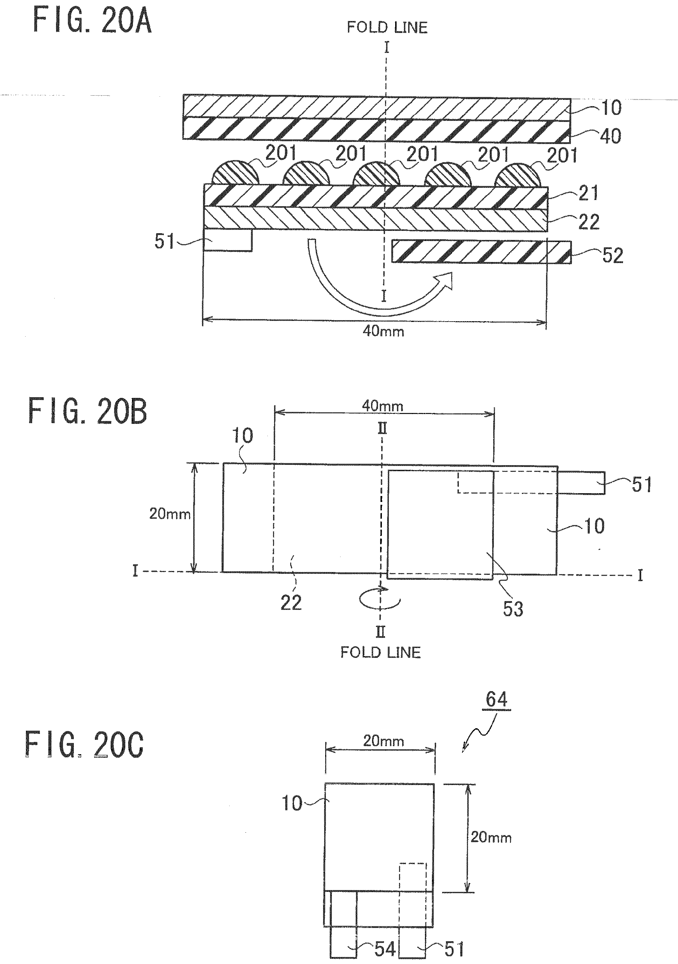

Fig. 20(a) is a schematic cross-sectional view illustrating a position of a first fold line to fold a flexible static-induction conversion element pertaining to the fourth embodiment in two, and Fig. 20(b) is a side view illustrating a position of a second fold line to further fold the static-induction conversion element in two that has already been folded in two as illustrated in Fig. 20(a), and Fig. 20(c) is a side view illustrating a completion figure of the conversion element pertaining to the fourth embodiment in which an extraction electrode is attached to the static-induction conversion element which has already been folded in two and finally folded in four as illustrated in Fig. 20(b).

Fig. 21 is a schematic block diagram explaining an outline of a main portion in an experiment device, which uses the conversion element pertaining to the fourth embodiment after the static-induction conversion element has already been folded in four as illustrated in Fig. 20(c), as an acceleration sensor, and then measures a frequency characteristics of an output ratio with respect to a marketed acceleration sensor.

Fig. 22 is a view illustrating a result when the experiment device illustrated in Fig. 21 is used to measure the frequency characteristics of the output ratio between the static-induction conversion element pertaining to the fourth embodiment and the marketed acceleration sensor.

Fig. 23 is a schematic cross-sectional view illustrating a static-induction conversion element pertaining to a fifth embodiment of the present invention.

Fig. 24 is a cross-sectional view illustrating a conventional ECM.

Fig. 25 is a view illustrating a temperature profile of a reflow-process in which the Pb-free solder is used.

Fig. 26 is a schematic cross-sectional view explaining a reason of a negative charge extinction of the conventional electret-structure.

## DESCRIPTION OF EMBODIMENTS

The first to fifth embodiments of the present invention will be described below with reference to the drawings. In the descriptions of the following drawings, the same or similar reference numerals are given to the same or similar portions. However, attention should be paid to a fact that, since the drawings are only schematic, a relation between a thickness and a planar dimension, and a ratio between the thicknesses of respective layers, and the like differ from the actual values. Thus, the specific thicknesses and dimensions should be judged by referring to the following explanations. In addition, naturally, the portion in which the relation and ratio between the mutual dimensions are different is included even between the mutual drawings.

Furthermore, because the following first to fifth embodiments are mere examples of various devices and methods to embody the technical idea of the present invention, in the technical idea of the present invention, the material quality, shape, structure, arrangement and the like of a configuration part are not limited to the followings, and various changes can be added to the technical idea of the present invention, within the technical scopes prescribed by claims.

## (FIRST EMBODIMENT)

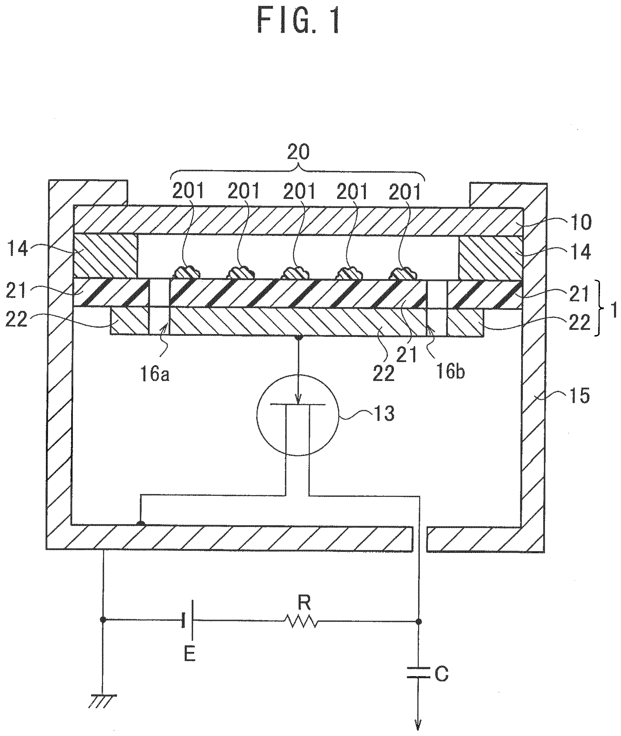

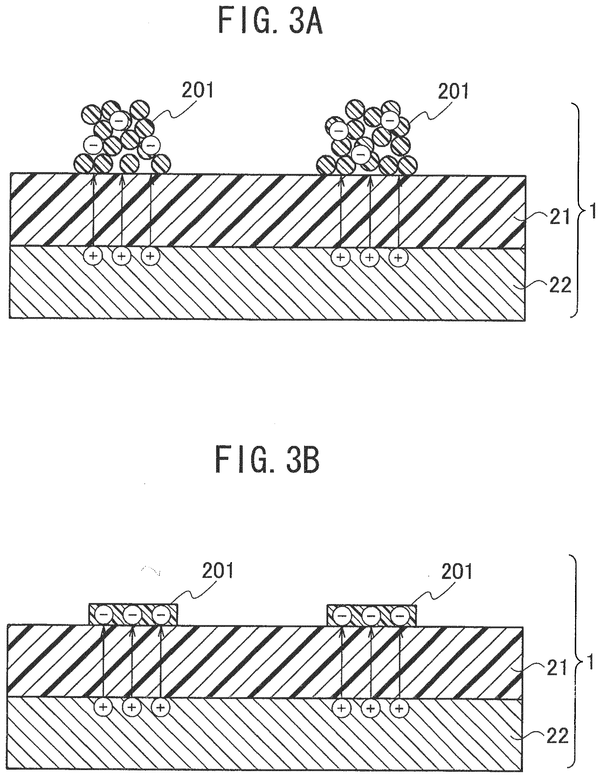

As illustrated in Fig. 1, a static-induction conversion element (ECM) pertaining to a first embodiment of the present invention is a microphone capsule that contains a vibration electrode (vibrator) 10 implemented by an electric conductor which has a flat vibration surface, a fluorine-resin film 21 defined by a flat first main surface opposite to the vibration surface of the vibration electrode 10 and a second main surface parallel and opposite to the first main surface, a silica layer 20 formed on an upper surface (the first main surface) of the fluorine-resin film 21, a back electrode 22 joined to a lower surface (the second main surface) of the fluorine-resin film 21, and a static-induction charge-measurement means (13, R, C and E) for measuring charges induced between the vibration electrode 10 and the back electrode 22 in association with displacement of the vibration electrode of the vibration electrode 10. The silica layer 20 is implemented by a plurality of island-shaped silica regions 201 adhered on the fluorine-resin film 21 in a topology that the island-shaped silica regions 201 are isolated from each other. However, as illustrated in Figs. 3(a) and 3(b), all of polarization directions within the fluorine-resin film 21, the polarizations are oriented toward respective lower surfaces of the plurality of island-shaped silica regions 201 from the back electrode 22, are aligned.

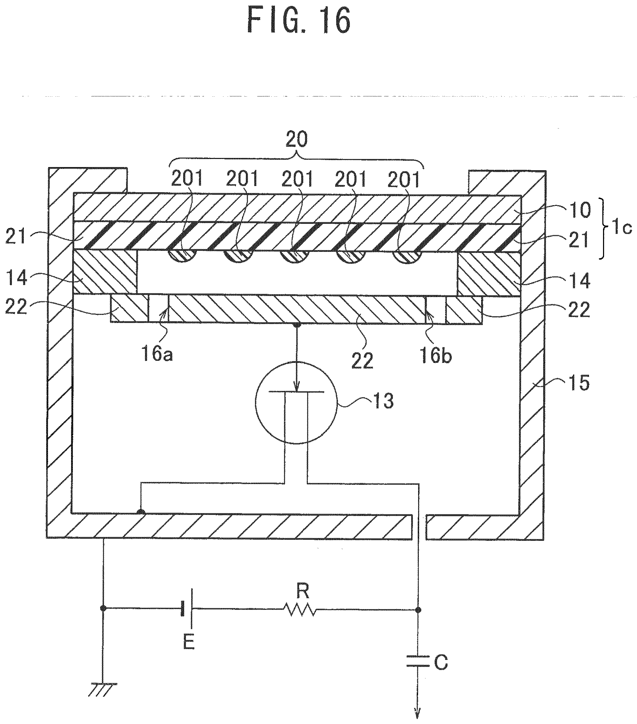

In the static-induction conversion element (ECM) pertaining to the first embodiment, the whole structure of laminated configuration illustrated in Fig. 1, which contains the fluorine-resin film 21, the back electrode 22 formed on the lower surface of the fluorine-resin film, and the silica layer 20 formed on the upper surface (the first main surface) of the fluorine-resin film 21, is referred to as "an electret-structure". By the way, as described later by using Fig. 16, the electrode formed on one of the surfaces of the fluorine-resin film 21, which implements "the electret-structure", may be the vibration electrode 10. That is, "an electrode formed on one of the surfaces of the fluorine-resin film", which implements one of components or a part of the structure defining "the electret-structure" in the present invention, may be assigned as the vibration electrode or the back electrode.

Apertures 16a and 16b are cut in the fluorine-resin film 21 and the back electrode 22, the apertures 16a and 16b penetrate through the fluorine-resin film 21 and the back electrode 22 to "the gap space" defined between the fluorine-resin film 21 and the vibration electrode 10 so that the apertures 16a and 16b can facilitate free vibration of the vibration electrode 10. The electret-structure 1 and the vibration electrode 10 pertaining to the first embodiment are accommodated in an electrically conductive metallic case 15 that is made of metallic material, and the metallic case 15 is grounded. At a condition of no load, the first main surface (the upper surface) of the fluorine-resin film 21 is provided in parallel with the vibration surface of the vibration electrode 10, facing to the vibration surface. Here, the static-induction charge-measurement means (13, R, C and E) are connected to the back electrode 22, the static-induction charge-measurement means (13, R, C and E) contains an amplifier (FET) 13 accommodated in the inside of the metallic case 15 and an output circuit (R, C and E) connected to the FET 13. The output circuit (R, C and E) is externally attached to the outside of the metallic case 15 and contains a direct current power supply E, in which one terminal is grounded, configured to drive the FET 13, an output resistor R connected between the direct current power supply E and the FET 13, and a coupling capacitor C, the one of the electrodes of the coupling capacitor C is connected to a connection node between the output resistor R and the FET 13, and the other one of the electrodes of the coupling capacitor C serves as an output terminal.

A gate electrode of the FET 13 is connected to the back electrode 22, and a source electrode of the FET 13 is grounded through the metallic case 15, and a drain electrode of the FET 13 for transmitting an amplified sound signal is connected, through the coupling capacitor C, to an external circuit (external device) whose illustration is omitted. That is, the external circuit is connected to the output terminal of the coupling capacitor C, and therefore, the output terminal of the coupling capacitor C serves as the output terminal of the static-induction charge-measurement means (13, R, C and E). Then, a signal process, required for a storage device and a communication device connected to the microphone, is carried out by the external circuit. The static-induction charge-measurement means (13, R, C and E) of the ECM pertaining to the first embodiment measures electrostatic induction charges that are electro-statically induced into the silica layer 20, in association with the displacement of the vibration surface of the vibration electrode 10, because a potential between the vibration electrode 10 and the back electrode 22 that implements the electret-structure 1 is amplified by the FET 13.

Although the illustration on a plan view or bird's eye view is omitted, each of the vibration electrode 10, the fluorine-resin film 21 and the back electrode 22 in the microphone capsule illustrated in Fig. 1 has a circular shape whose radius is between three millimeters and 40 millimeters. As illustrated in Fig. 1, a spacer ring 14 of insulator is sandwiched between the fluorine-resin film 21 and the vibration electrode 10 that are circularly shaped. A circumference of the circularly-shaped vibration electrode 10 is connected to an upper end surface of the spacer ring 14. For this reason, the electret-structure 1, the spacer ring 14 and the vibration electrode 10 are accommodated in the metallic case 15 and implement the microphone capsule.

That is, the spacer ring 14 defines an interval between the vibration electrode 10 and the silica layer 20, which are provided in parallel, being opposite to each other. A thickness of the fluorine-resin film 21 can be selected as, for example, about ten micrometers to 400 micrometers, a thickness of the back electrode 22 can be selected as, for example, about ten micrometers to 50 micrometers, and a thickness of the vibration electrode 10 can be selected as, for example, one micrometer to 100 micrometers. However, the concrete thickness and radius of each of the vibration electrode 10, the fluorine-resin film 21 and the back electrode 22 is determined on the basis of the required performance and device specification.

By the way, although the illustration is omitted in Fig. 1, the electret-structure 1 may be sandwiched between the spacer ring 14 and a holder, which are the insulators. The holder may be made of insulator so as to exhibit a cylindrical shape substantially similar to the spacer ring 14 in which an outer circumference of the holder contacts with an inner wall of the metallic case 15.

The FET 13 is electrically connected to the back electrode 22 through molten solder, which is bonded to the vicinity of the center of the back electrode 22. The apertures 16a and 16b that penetrate through the back electrode 22 and the fluorine-resin film 21 are cut in the back electrode 22 and the fluorine-resin film 21. However, with regard to the apertures 16a and 16b, gas, or the insulating gas, whose insulating property is high, may be encapsulated in the gap space between the fluorine-resin film 21 and the back electrode 22, as necessary, the apertures 16a and 16b and the like. As the insulating gas, it is possible to employ nitrogen, sulfur hexafluoride and the like. When insulating fluid such as silicon oil and the like other than the insulating gas is filled in the gap space between the fluorine-resin film 21 and the vibration electrode 10, insulation breakdown strength is increased, thereby making the generation of electrical discharge difficult. As a result, the charge amount on the surface of the fluorine-resin film 21, which is deposited by the electrical discharge, can be reduced, thereby improving the sensitivity of the static-induction conversion element (ECM). Instead of a configuration in which the gap space is filled with the insulating gas or insulating fluid, the sensitivity can be improved when the gap space between the fluorine-resin film 21 and the vibration electrode 10 is evacuated to vacuum.

By the way, each of the vibration electrode 10 and the electret-structure 1 is not required to have the circular shape and may have the other geometric shape such as an ellipse, a rectangle and the like. In this case, the other member such as the metallic case 15 and the like is naturally designed to comply with the geometric shape of the electret-structure 1.

Here, the silica that implements each of the island-shaped silica regions 201 is silicon oxide represented by $SiO_x$ (x = 1 to 2). As the fluorine-resin film 21 is required to have a surface resistivity of $10^{16}$ $\Omega$/sq. or more and is required to be excellent in heat resistance characteristics, insulation characteristics and high water repellency characteristics, the materials that are typically used as the electret, such as the poly-tetra-fluoro-ethylene (PTFE), the per-fluolo-alkoxy ethylene copolymer (PFA), the tetra-fluoro-ethylene-hexa-fluoro-propylene copolymer (FEP), the poly-chloro-trifluoro-ethylene (PCTFE) and the like, comply with such required conditions. Those resins have the surface resistivity of $10^{16}$ $\Omega$/sq. or more and have the excellent heat resistance and insulation properties. Thus, the diffusion of the charges toward a surface direction is suppressed at a high temperature condition and a high humidity condition. Also, since the water repellency is high, it is easy to form the island-shaped silica regions 201. Also, the back electrode 22 is required to be electrically conductive and to susceptible to a reflow temperature. For example, it is possible to use Al alloy, stainless steel, Ti alloy, Ni alloy, Cr alloy, Cu alloy and the like.

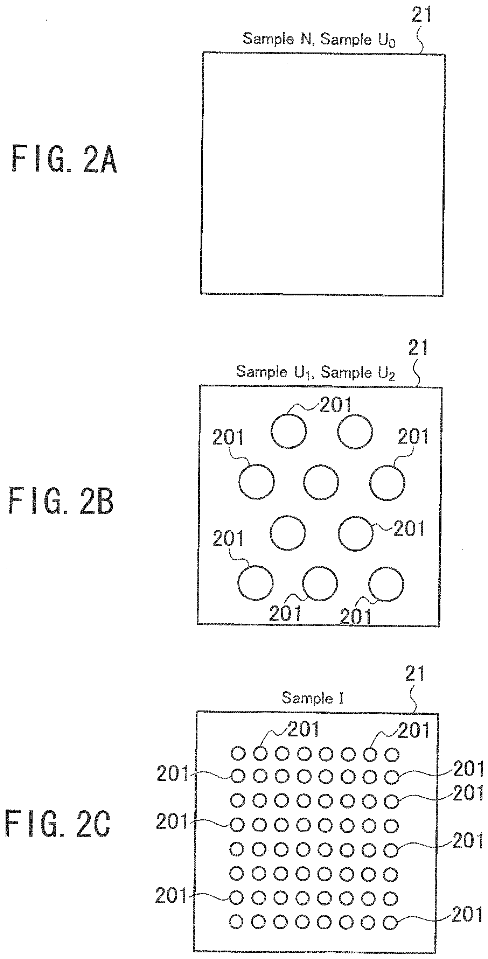

Fig. 2(a) illustrates a plan view of a sample N and a sample $U_0$. In the sample N, the fluorine-resin film 21 made of PFA that has a thickness of 12.5 micrometers, on which the silica-aggregate is not coated, is vacuum-adhered onto one of the surfaces of an Al plate that has a thickness of 0.1 millimeter. In the sample $U_0$, the silica-aggregate is formed on the entire surface of the fluorine-resin film by spraying silica sol (colloidal silica, 20wt%, a primary particle diameter of 40 to 50 nanometers, SNOWTEX 20L made by NISSAN CHEMICAL INDUSTRIES, LTD) onto the entire surface of the fluorine-resin film 21 made of the PFA, which was referred as the sample N, while Figs. 2(b) and 2(c) illustrate plan views of the island-shaped silica regions 201 arranged on the fluorine-resin film 21.

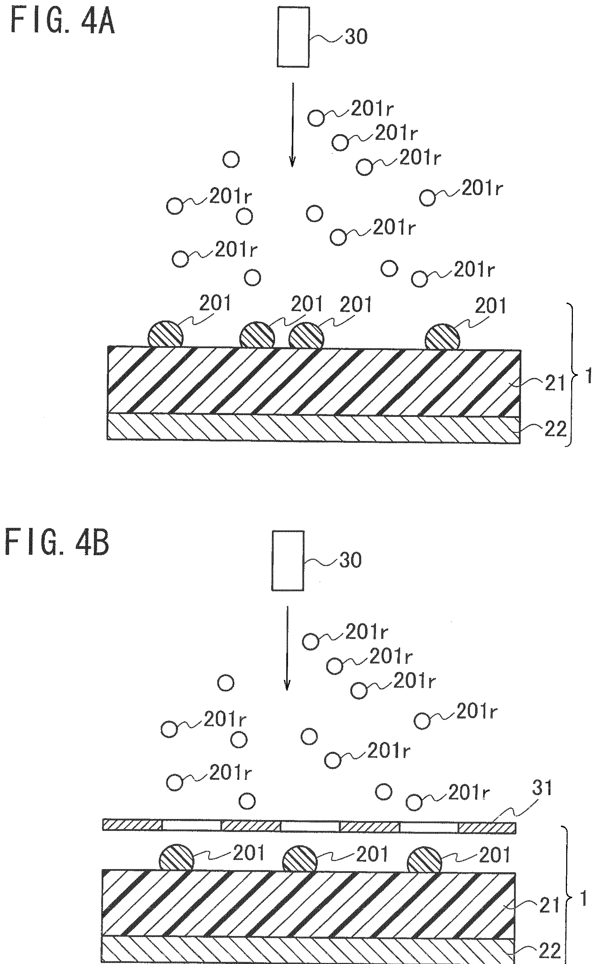

Fig. 2(b) illustrates a sample $U_1$ (diameter of aggregate: 1.5 millimeters) and a sample $U_2$ (diameter of aggregate: 0.5 millimeter), which are fabricated by a scheme such that a mask 31 of an punched Al plate as illustrated in Fig. 4(b) is placed on the fluorine-resin film 21 made of the PFA, which is the same material as the PFA used in the sample N, and the colloidal silica is sprayed onto the fluorine-resin film 21, and isolated silica-aggregates are generated in a shape of a triangular grid. Fig. 2(c) illustrates a sample I, which is fabricated by a scheme such that the colloidal silica is coated on the fluorine-resin film 21 at a discharge rate of 360 pl (picoliter) per one point by using an ink jet printer ("Labjet" made by MICROJET Corporation) and then, the isolated silica-aggregates are formed in a shape of a square grid with 100 micrometer pitches. By the way, when the samples $U_0$, $U_1$ and $U_2$ are generated, the colloidal silica atomized by an ultrasonic nebulizer is sprayed. Because the samples illustrated in Figs. 2(b) and 2(c) are provided for experimental objectives, the arrangement and shape of the island-shaped silica regions 201 of the electret-structure used in the actual ECM are not limited to the topologies illustrated in Figs. 2(b) and 2(c).

Also, Fig. 3(a) schematically explains the detail of the cross-sectional structure of the electret-structure 1 pertaining to the first embodiment, and illustrates a relation between the island-shaped silica regions 201, the fluorine-resin film 21 and the back electrode 22 when they are viewed as the cross-section. These island-shaped silica regions 201 are implemented by the aggregates of amorphous silica particles. The amorphous silica particles are dispersed as the aggregates between several 100 nanometers to several micrometers in solution, and an average particle diameter of primary particles is four nanometers to 450 nanometers. When the solution in which these aggregates are dispersed is coated on the fluorine-resin film 21, it is possible to form the island-shaped silica regions 201 implemented by the aggregates of the amorphous silica particles. Since the aggregate of the amorphous silica is large in surface area, a large amount of water molecules are adsorbed on the surface, and with its influence, an apparent dielectric constant of the aggregate is increased. As a result, when the corona-discharge or the plasma discharge is carried out to generate the electret, the electric fields are concentrated onto the aggregate of the amorphous silica. Thus, negative charges can be selectively deposited on the island-shaped silica regions 201.

By the way, the island-shaped silica region 201 of the electret-structure 1 pertaining to the first embodiment is not limited to the aggregate of the amorphous silica. For example, the island-shaped silica region 201 may be formed by thin film of amorphous silica or polycrystalline silica, as illustrated in Fig. 3(b). The thin film of the amorphous silica or polycrystalline silica illustrated in Fig. 3(b) can be formed by vacuum evaporation method, sputtering method, a chemical vapor deposition (CVD) method, a physical vapor deposition (PVD) method or the like. As explained later, in case of the vacuum evaporation method, the sputtering method, the CVD method, the PVD method, the island-shaped silica region can be selectively formed on the fluorine-resin film 21, when the surface of the fluorine-resin film 21 is masked.

Fig. 4(a) illustrates an example in which without any use of the mask, water-soluble silica sol is coated on the fluorine-resin film 21 by adjusting a spray amount from a spray nozzle 30. In the preparations of samples $U_1$, $U_2$ and I illustrated in Figs. 2(b) and 2(c), the mask 31 for defining the shapes and positions of the island-shaped silica regions 201 is respectively arranged on the fluorine-resin film 21 as illustrated in Fig. 4(b). Then, from the spray nozzle 30, a mist 201r of liquid droplets in silica sol water solution is sprayed over the mask 31 to the fluorine-resin film 21, and the island-shaped silica regions 201 are formed. The fluorine resin is high in water repellency. Thus, the mist 201r of the liquid droplets in the silica sol water solution that arrives at the fluorine-resin film 21 becomes a water droplet whose shape is close to a ball and deposited on the fluorine-resin film 21. The size of the silica-aggregate is determined on the basis of the size of the water droplet formed on the fluorine resin and a silica concentration (10 to 50 wt%) of the silica sol. The size of the water droplet has influence not only on a size (one micrometer to one millimeter) of the silica sol liquid droplet sprayed by the spray nozzle 30, but also on a mechanism that different mists 201r are repeatedly deposited on the previously deposited mists 201r of the liquid droplets of the silica sol water solution, which are deposited on the fluorine-resin film, and united with the previously deposited mists 201r. When the water droplets deposited on the fluorine-resin film 21 are dried, the island-shaped silica regions 201 implemented by the isolated silica-aggregates are formed.

Next, an electret-formation process for carrying out negative charge electrification through the corona-discharge or plasma discharge is performed on the electret-structure in which the island-shaped silica regions 201 are formed. The electret-formation process itself has been widely performed from old time. Although the electret-formation process itself is not explained in detail, with the execution of the electret-formation process, the negative charges are selectively deposited on the island-shaped silica regions 201, as illustrated in Fig. 3(a). This is because a large amount of water molecules included in air are chemically adsorbed on the surface of the silica-aggregate whose surface area is large, and the apparent dielectric constant, or the pseudo dielectric constant of the island-shaped silica regions 201 is increased. As a result, at a time of the electret-formation process, the electric fields are concentrated on the island-shaped silica regions 201, and the negative charges are pulled onto the island-shaped silica regions 201, and most of the negative charges are deposited on the island-shaped silica regions 201.

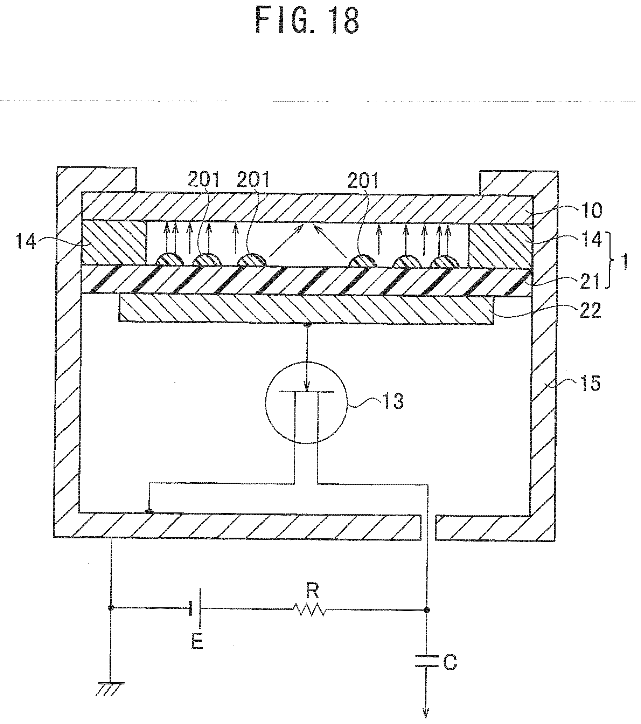

In the electret-structure 1 pertaining to the first embodiment, each of the island-shaped silica regions 201 is isolated on the fluorine-resin film 21 whose surface resistivity is high. Thus, even at a reflow temperature of the Pb-free solder, the diffusion to the surface direction and the diffusion to the thickness direction of the fluorine-resin film 21 of the negative charges illustrated in Fig. 18 are hardly generated. For this reason, the negative charges held in the island-shaped silica regions 201 are extinguished only when the negative charges are coupled to positive charges (holes) diffused from the back electrode 22.

Inside the fluorine-resin film 21, defective portions that are poor in insulation characteristics exist at a certain rate. The holes (positive charges) are easy to diffuse from the back electrode 22 through the defective portions. For this reason, when the island-shaped silica region 201 exists on the defective portions in the fluorine-resin film 21, the negative charges deposited on the island-shaped silica region 201 has a high possibility that the negative charges are lost at a state of high temperature. A probability at which the island-shaped silica regions 201 exist on the defective portions in the fluorine-resin film 21 depends on an area of the individual island-shaped silica region 201. Then, as its area becomes wider, the probability becomes higher, and as the area becomes narrower, the probability becomes lower. Thus, in a range in which the total area of the entire island-shaped silica regions 201 is not excessively small, the area of the individual island-shaped silica region 201 is made small, which can reduce the extinction of the negative charges that is caused by the coupling to the positive charges (holes). Hence, it is possible to increase the charge retaintivity at the reflow temperature of the Pb-free solder. For this reason, the reflow-process of the Pb-free solder can be performed on the ECM in which the electret-structure 1 pertaining to the first embodiment is assembled, when the ECM is mounted into a substrate.

By the way, in the electret-structure 1 pertaining to the first embodiment, the silica sol is sprayed onto the fluorine-resin film 21, thereby forming the silica-aggregates isolated from each other. However, by coating the silica sol on the fluorine-resin film 21 by using inkjet printing or screen printing, it is possible to form the silica-aggregates isolated from each other.

A measured result with regard to various properties of the electret-structure 1 pertaining to the first embodiment will be described below.

**(MOISTURE RESISTANCE PERFORMANCE)**

We measured moisture resistance characteristics of the electret-structure, because the electret-structure included the silica has a high hydrophilic property, which may cause deterioration in the moisture resistance performance. Here, as illustrated in Fig. 2(a), we prepared the sample N in which the PFA film 21 having the thickness of 12.5 micrometers where the silica-aggregate was not coated was vacuum-adhered onto the one of the surfaces of the A1 plate having the thickness of 0.1 millimeter, the sample $U_0$ in which the silica-aggregate was formed on the entire surface of the fluorine-resin film by spraying the silica sol (the colloidal silica, 20wt%, the primary particle diameter of 40 to 50 nanometers, SNOWTEX 20L made by NISSAN CHEMICAL INDUSTRIES, LTD) onto the entire surface of the PFA film of the sample N, the sample $U_1$ (the diameter of the aggregate: 1.5 millimeters) and the sample $U_2$ (the diameter of the aggregate: 0.5 millimeter) in as illustrated in Fig. 2(b), the mask of the punched A1 plate was placed on the PFA film of the sample N, and the colloidal silica was sprayed onto the fluorine-resin film, and the isolated silica-aggregates were generated in the shape of the triangular grid, and the sample I in as illustrated in Fig. 2(c), the colloidal silica was coated onto the fluorine-resin film at the discharge rate of 360 pl (picoliter) per one point by using the inkjet printer (Labjet) and then, the isolated silica-aggregates were generated at the shape of the square grid of 100 micrometers pitches. By the way, when the samples $U_0$, $U_1$ and $U_2$ were prepared, the colloidal silica atomized by the ultrasonic nebulizer was sprayed.

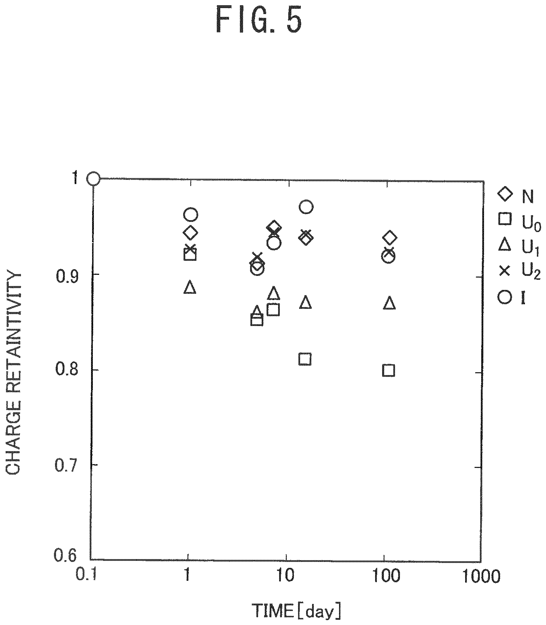

Those samples $U_0$, $U_1$, $U_2$ and I were charged by the corona-discharge method, and the negative charges were deposited. At this time, surface potentials of the samples $U_0$, $U_1$, $U_2$ and I were all set to -1 kV. And, the respective samples $U_0$, $U_1$, $U_2$ and I were placed in atmosphere of a room temperature of (15 to 25 degrees Celsius) and a humidity of 30 to 90 % for 110 days, and in the meanwhile, the surface potential of each of the samples $U_0$, $U_1$, $U_2$ and I was measured at any time, and the charge retaintivity (ratios between measured values of surface potential and the original surface potential) of each of the samples $U_0$, $U_1$, $U_2$ and I was measured. Fig. 5 illustrates this measured result.

The sample I and the sample $U_2$ do not exhibit any change in their charge retention characteristics, as compared with the sample N (having no silica-aggregate), and the issue of decrease in the moisture resistance characteristics caused by the silica-aggregate is solved. In the sample $U_1$, its charge retaintivity is slightly decreased as compared with the sample N. However, after an elapse of about ten days, a further decrease in charge retaintivity than the foregoing ten days is not found. In the sample $U_0$ (the silica-aggregate is coated on entire surface), the charge retaintivity is monotonically decreased, which indicates that the silica-aggregate causes the severe deterioration in the moisture resistance characteristics.

Table 1 illustrates the measured result for the samples $U_0$, $U_1$, $U_2$ and I after the elapse of 110 days. The table illustrates the ratios between charge-retention amounts of the samples $U_0$, $U_1$, $U_2$ and I and the charge-retention amount of the sample N, as "the charge retaintivities". Also, Ds indicates diameters of the aggregate, and As indicates coating areas per one aggregate (= a cover area), and Rs indicates ratios, or coating area ratios (= coverage) of the coating areas of the silica-aggregates to the fluorine-resin film surface area.

[Table 1]

| Sample Name | $U_0$ | $U_1$ | $U_2$ | I |
|---|---|---|---|---|
| Coating Condition | Ultrasonic Atomization | | | Inkjet Printing |
| | Entire Surface Coating | Coating with Masking | | |
| Diameter Ds[mm] | - | 1.5 | 0.5 | 0.04 |
| Cover area As [mm$^2$] | - | 1.767 | 0.196 | 0.001 |
| Cover ratio Rs [%] | 100 | 22.7 | 22.7 | 12.6 |
| Charge retaintivity[%] | 85.5 | 62.9 | 96.1 | 98.3 |

A reason why the charge retaintivity of the sample $U_1$ is slightly decreased as compared with the values of the sample $U_2$ and the sample I is caused by a fact that the cover area As of the silica-aggregate is large.

**(RELATIONSHIP WITH COVER AREAS AND COVERAGE)**

As mentioned above, as the cover area As per one silica-aggregate becomes larger, a probability at which the silica-aggregate is located on the defective portion of the fluorine-resin film 21 becomes higher, which decreases the charge retaintivity. In Table 1, the reason why the charge retaintivity of the sample $U_1$ is decreased as compared with the values of the sample $U_2$ and the sample I lies on the above high probability. However, if the cover area As per one silica-aggregate is made small which may lead to a result that the cover ratio (coverage) Rs at which the total area of the cover areas As of all of the silica-aggregates occupies the surface area of the fluorine-resin film 21 becomes extremely small, the effect of the installation of the silica-aggregates is clearly reduced.

So, we will review relationships of the cover areas As or the coverage Rs with the charge retaintivity. Let us suppose that the surface area of the fluorine-resin film is Af, the number of the defects per unit area on the fluorine-resin film surface is Pd, the number of the aggregates per unit area is Ns, and with regard to the silica-aggregates coated on the defective portion of the fluorine-resin film, a decrease rate of the charge-retention amount after a certain time is fs. Then, a charge retaintivity r after the certain time of the entire samples is represented by the following Eq. (1):

$$r = 1 - Ns \cdot As \cdot Pd \ (As/Af) \ fs$$
$$= 1 - Rs \cdot As \cdot Pd \cdot fs \qquad\qquad \ldots\ldots\ldots(1)$$

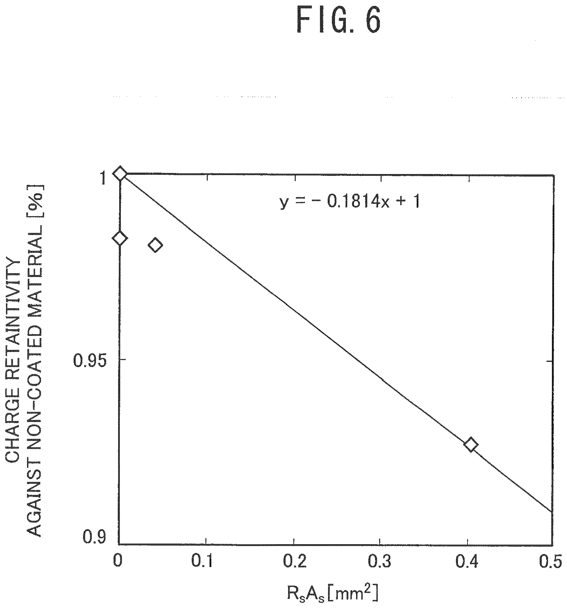

Thus, the charge retaintivity r is proportional to a product Rs·As of the coverage Rs and the cover area As. Fig. 6 illustrates the relation between the products Rs·As calculated from the measured results of Table 1 and the charge retaintivities r.

From the relation, in a case that the product Rs·As is 0.5 mm$^2$ or less, even if the silica-aggregates are coated on the fluorine-resin film, the charge retaintivity r is understood to be suppressed at a decrease rate of 10 % or less, as compared with the fluorine-resin film on which the silica-aggregates are not coated. Within the fluorine-resin film 21, the defective portions that are poor in the insulation characteristics exist at a certain rate, and through the defective portions, holes (positive charges) are easily diffused from the electrode. For this reason, when the island-shaped silica region 201 is located on the defective portion of the fluorine-resin film 21, the negative charges deposited on the island-shaped silica region 201 are lost at high temperature, and the charge retaintivity is decreased. Thus, the charge retaintivity r is proportional to the product of the coverage Rs resulting from all of the island-shaped silica regions 201 and the cover area As per one island-shaped silica region 201. When this product Rs·As is 0.5 mm$^2$ or less, the decrease in the charge retaintivity r at high temperature is suppressed.

**(HEAT RESISTANCE CHARACTERISTICS)**

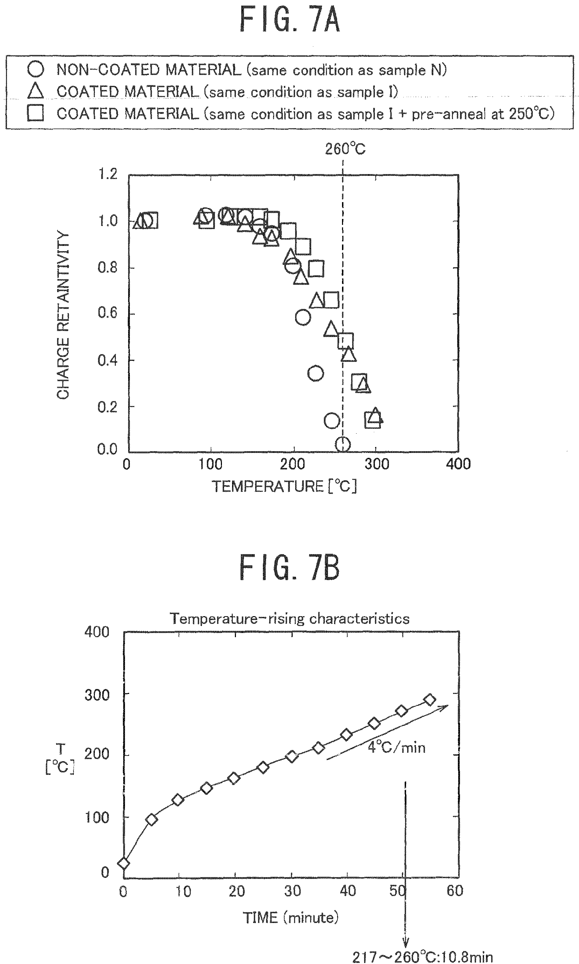

We measured the heat resistance characteristics of the electret-structure 1 pertaining to the first embodiment by using the following method. Samples were prepared under the same condition as the sample N and the sample I, and they were made into the electrets so that their surface potentials became -1 kV by the corona-discharge. And, the respective samples were slowly heated to 300 degrees Celsius at a temperature-rising rate of four degrees Celsius/min on a hot plate. In the meanwhile, a surface potential of the sample was measured for each five minutes, and the charge retaintivity was investigated. Fig. 7(b) illustrates the measuring time dependency of temperature-rising characteristics. Fig. 7(a) illustrates the measured result of charge retaintivity r. The charge retaintivity r of the sample of the same condition as the sample N is indicated by symbols of open circle, and a charge retaintivity r of the sample of the same condition as the sample I is indicated by symbols of open triangle.

In the sample of the same condition as the sample N that has no silica-aggregate, the charge retaintivity r begins to be decreased from the vicinity of 180 degrees Celsius, and their charges are almost extinguished. On the other hand, in the sample of the same condition as the sample I that has the silica-aggregates, although the charge retaintivity r begins to be decreased from the vicinity of 180 degrees Celsius, its decrease rate is smaller than that of the sample of the same condition as the sample N. As a result, the charges of 42 % are held even at 260 degrees Celsius.

The temperature-rising rate of this experiment is greatly slower than that of the actual reflow-process. It takes 650 seconds for temperature-rising in a zone between 217 to 260 degrees Celsius. In the typical reflow-process, the temperature-rising time in the temperature zone between 217 to 260 degrees Celsius is about 60 seconds. The charge retaintivity of the charges depends on the power of a heating time. Thus, when the charge retaintivity r in a case that the holding time in the temperature zone between 217 to 260 degrees Celsius is 60 seconds is calculated from the result of Fig. 7(a), the charge retaintivity r is 59 % in the sample of the same condition as the sample N. However, the charge retaintivity r is 92 % in the sample of the same condition as the sample I. Hence, the heat resistance characteristics is understood to be greatly improved.

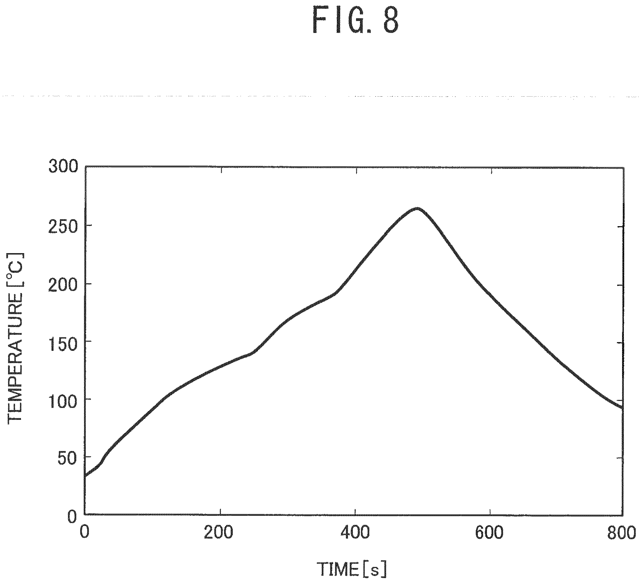

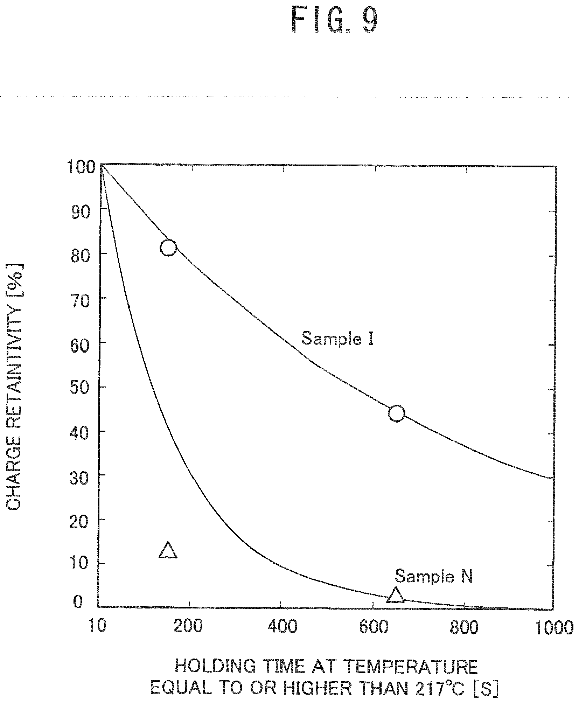

Next, we used a reflow-process furnace and prepared the samples of the same condition as the sample N and the sample I and carried out a heating test (hereafter, referred to as "a reflow test") under the assumption of the reflow-process in a batch type reflow-process furnace. Fig. 8 illustrates a temperature profile with regard to the temperature-increase and temperature-decrease at reflow test. In the reflow test, a peak temperature was 262 degrees Celsius and a holding time for the temperature zone of 217 degrees Celsius or more was 151 seconds. Fig. 9 illustrates a result in which a relation between the holding time for the temperature zone of 217 degrees Celsius or more and the charge retaintivity r is plotted on the basis of the results of Fig. 7 and Fig. 8. Also, a curve of Fig. 9 illustrates a relation between the charge retaintivity r and the holding time, which is expected from the result of Fig. 7, under the assumption that the charge retaintivity r depends on the power of the heating time. In the sample of the same condition as the sample I, which is indicated by symbols of open circle, the charge retaintivity r is known to depend on the power of the holding time, from Fig. 9.

However, in the sample of the same condition as the sample N indicated by symbols of open triangle, the charge retaintivity r in the reflow test is greatly low as compared with a value expected from the power rule of the holding time. Although this reason is unclear, a hopping conduction when the negative charges captured on a trap level are heated is considered to be related. The negative charges captured in a trap level are repeatedly hopping-conducted at different trap levels at a time of heating and finally arrive at conduction band and are diffused within the film. To the contrary, if the temperature-rising rate is slow, the negative charges are captured at a deeper trap level in the hopping at a low temperature, and there is a possibility of stabilization. Thus, the sample of the same condition as the sample N is considered to exhibit the result illustrated in Fig. 9 because the negative charges are easily stabilized when the sample is heated by using the hot plate whose temperature-rising rate is slow.

On the other hand, for the sample of the same condition as the sample I, an abundant of deep trap levels exist on the surfaces of the silica-aggregates. Thus, it is considered that the negative charges are easily stabilized and irrespectively of the temperature-rising rate, the charge retaintivity r indicates the relation of the power rule of the holding time. Hence, since the silica-aggregates are formed on the fluorine-resin film 21, the stable charge retaintivity is obtained irrespectively of the temperature-rising rate. Also, for the newly prepared samples under the same conditions as the samples N and I, their surface potentials were set to 0.3 kV by the corona-discharge, and before and after the reflow test under the above condition, the samples of the same conditions as the samples N and I were used as the electret-structure 1 of Fig. 1. With the electret-structures 1 implemented by the samples of the same conditions as the samples N and I, ECMs as illustrated in Fig. 1, pertaining to the first embodiment, were prepared, whose outer diameters were ten millimeters. Table 2 illustrates the average sensibilities measured between 100 Hz and 10 kHz by the ECMs, which are prepared by the electret-structures 1 implemented by the samples of the same conditions as the samples N and I that time.

[Table 2]

| Measurement Item | Sample N | | Sample I | |
|---|---|---|---|---|
| | Reflow Test | | Reflow Test | |
| | Before | After | Before | After |
| Charge retaintivity (%) | 100 | 11 | 100 | 70 |
| Average sensitivity (%) | -47 | -58 | -47 | -50 |

In the electret-structure 1, prepared under the same condition as the sample 1, the decrease of the sensitivity of ECM is suppressed to 3 dB. Usually, the ECM is required so that the decrease of the sensitivity after the two times of reflow-processes is 3 dB or less. Thus, in order to attain this value, PTFE having a thickness of 25 micrometers is used in the electret.

In the result of Table 2, the holding time for the temperature zone of 217 degrees Celsius or more is 151 seconds, which exceeds the total holding time through the two times of reflow-processes. Thus, it is known that, since the silica-aggregates are formed on the fluorine-resin film 21, the electret-structure 1, which can endure the temperature of reflow-process, can be manufactured even if the PFA, the cost of which is lower than the PTFE, is used and a thickness of the PFA is 12.5 micrometers, which is half of the thickness of the PTFE.

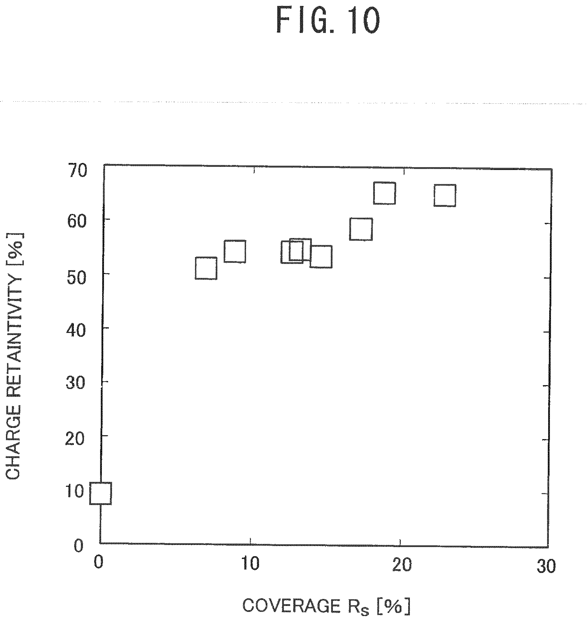

Also, Fig. 10 illustrates a result when the relation between the coverage Rs and the charge retaintivity r is measured. Here, by changing coating intervals on the silica-aggregates by the inkjet printing, we prepared a plurality of samples whose coverage Rs differed from each other and heated those samples to 250 degrees Celsius in accordance with the temperature-rising characteristics in Fig. 7(b), and then measured the charge retaintivity r at 250 degrees Celsius. In Fig. 10, abscissa illustrates the coverage Rs, and ordinate illustrates the charge retaintivity r at 250 degrees Celsius. Because it is estimated that the peak temperature of the reflow-process is required to be at least 250 degrees Celsius, and under an assumption that the holding time for the temperature zone of 217 degrees Celsius to 250 degrees Celsius is 60 seconds, for obtaining the charge retaintivity r of 90 % or more, the charge retaintivity r of 40 % or more is required in Fig. 10.

From Fig. 10, if the coverage Rs is 5 % or more, it is known to comply with the above condition. Unless the coverage Rs of the cover area implemented by all of the island-shaped silica regions 201 is 5 % or more, it is impossible to expect the improvement of the charge retention characteristics at high temperature. As illustrated in Fig. 10, even if the coverage Rs is 5 %, a reason why the charge retention characteristics at high temperature is greatly improved lies in the above mentioned mechanism that the large amount of the water molecules are chemically adsorbed on the surfaces of the silica-aggregates and consequently, the dielectric constant is increased, and at the time of the electret-formation process, most of the negative charges are deposited on the silica-aggregates.

By the way, when the coverage Rs exceeds 90 %, because the surface resistivity decreases by one digit, it is impossible to ignore the leakage of the charges to the surface direction, which is illustrated in Fig. 26. In order to use the fluorine-resin film 21 as the electret, the surface resistivity of the fluorine-resin film 21 is required to be $10^{16} \Omega$/sq or more. For this reason, the coverage Rs is required to be in a range between five and 90 %. As can be understood from Fig. 10, a desirable range of the coverage Rs is between six and 25 %. Also, when an interval between the silica-aggregates, or the shortest distance along on the fluorine resin from a certain silica-aggregate to another silica-aggregate, becomes 100 nanometers or less, it is impossible to ignore the leakage current caused by tunneling effect. For this reason, the interval between the silica-aggregates is required to be 100 nanometers or more, and one micrometer or more is desirable.

**(VALUES OF SURFACE POTENTIAL)**

The electret-structure 1, in which the silica-aggregates are formed on the fluorine-resin film 21, can keep a great surface potential, as compared with the conventional electret-structure implemented only by the fluorine-resin film 21 having no silica-aggregate, and can establish a high electric field. For comparison, when by the corona-discharge, the negative charges were deposited as much as possible on the electret-structure where the PFA film having a thickness of 12.5 micrometers was adhered or deposited to an Al electrode by melting, within an electric field range by which the breakdown of the PFA film was not involved, the surface potential of the PFA film arrived at -1.76 kV.

However, when the foregoing electret-structure was left in its original state, a value of the surface potential of the PFA film was gradually decreased, and, after the PFA film was let stand for one hour, the value was decreased to -1.26 kV. On the other hand, when negative charges were deposited as much as possible by corona-discharge on the electret-structure 1 pertaining to the first embodiment in which the silica-aggregates were formed on the fluorine-resin film 21, prepared under the same condition as the sample 1, the surface potential of the PFA film arrived at -1.98 kV.

And, even if the electret-structure 1 pertaining to the first embodiment was let stand, the surface potential was not changed. Thus, according to the electret-structure 1 of the first embodiment, finally, since the silica-aggregates were formed on the fluorine-resin film 21, the value of the surface potential of the PFA film was improved by about 50 % or more.

This implies that in the electret-structure 1 pertaining to the first embodiment, since the silica-aggregates are formed on the fluorine-resin film 21, the thickness of the fluorine-resin film 21 required to obtain a certain surface potential can be decreased by 34 % or more. Thus, the thickness of the fluorine-resin film 21 can be made thinner. The achievement of the thinner thickness of the fluorine-resin film 21 leads to the increase in the electrostatic capacitance of the ECM. As a result, it is possible to achieve the reduction in noise or the further miniaturization.

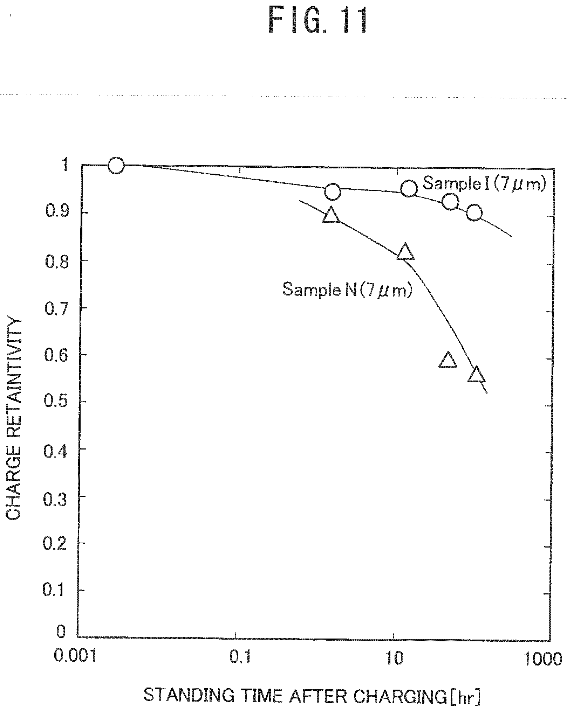

We prepared an electret-structure (sample N with a thickness of seven micrometers) in which a thickness of the PFA film used in the fluorine-resin film 21 was thinned to seven micrometers and the thinned PFA film was adhered or deposited to the A1 electrode by melting, and an electret-structure (sample I with a thickness of seven micrometers) in which, prepared under the same condition as the sample I, the silica-aggregates were formed on the PFA film having a thickness of seven micrometers. Then, we performed the corona-discharge on both of the electret-structures, and further set to their surface potentials to -1.4 kV, and both of them were left at a room temperature. Fig. 11 illustrates a standing time dependence behavior of the charge retaintivity r of above samples N and I. When excessive charging was performed, the deterioration at the surface potential was greatly suppressed because the silica-aggregates were coated on the fluorine-resin film 21. Usually, when the thickness of the fluorine-resin film 21 is set to be ten micrometers or less, the variation in the thickness and the defect such as pinholes and the like are increased, which disables manufacturing of a dielectric polarization plate, functioning as stable electret. However, from the result of Fig. 11, according to the electret-structure 1 of the first embodiment, the use of the silica-aggregate facilitates the film of the fluorine-resin film 21 to become thinner.

## (FURTHER IMPROVEMENT OF HEAT RESISTANCE CHARACTERISTICS)

In the electret-structure 1 pertaining to the first embodiment, it is possible to further improve the charge retention characteristics at high temperature, by performing the following process.

(a). When the silica sol is used to coat the silica-aggregates on the fluorine-resin film 21, there is a case that excessive waters still remain in capillaries and the like, which are formed in the silica-aggregate. In particular, in a case of the inkjet printing or screen printing, the above tendency of the remnant water is severe. In this way, when the there are the excessive waters physically adsorbed on the silica-aggregates on the fluorine-resin film 21, a part of the negative charges diffuse into the surface of the fluorine-resin film 21 from the silica-aggregates through the excessive waters. Thus, the heat resistance characteristic is decreased. For this reason, prior to the electret-formation process, the electret-structure 1 is heated, thereby removing the excessive waters adsorbed on the silica-aggregates. Consequently, the charge retaintivity r at high temperature is improved.

In Fig. 7(a), the samples are prepared by the procedure such that a silica layers 20 were formed by using the inkjet printing so as to coat the silica-aggregates on the fluorine-resin films 21, then the fluorine-resin films 21 were heated (pre-annealed) up to 250 degrees Celsius so as to remove the excessive waters, and after that, the charging process was performed on the samples. Fig. 7(a) illustrates the charge retention characteristics of the samples prepared by above mentioned procedure by using symbols of open quadrangle. As can be understood from Fig. 7(a), the heat resistance characteristics of the electret-structure 1 pertaining to the first embodiment is further improved. As to pre-annealing temperature, the pre-annealing temperature may be enough to be 100 degrees Celsius or more, because the unnecessary water except chemical adsorbed water may be removed, but the higher temperature is preferable in order to make the water removing time shorter. On the contrary, even if the samples are heated up to 300 degrees Celsius or more so as to melt the fluorine-resin film 21, because there is not any great difference in density between the fluorine resin and the silica, the silica-aggregates will not sink or dip down in the fluorine-resin films 21. Thus, the samples can be heated up to 400 degrees Celsius, at which the fluorine-resin film 21 begins to dissolve.

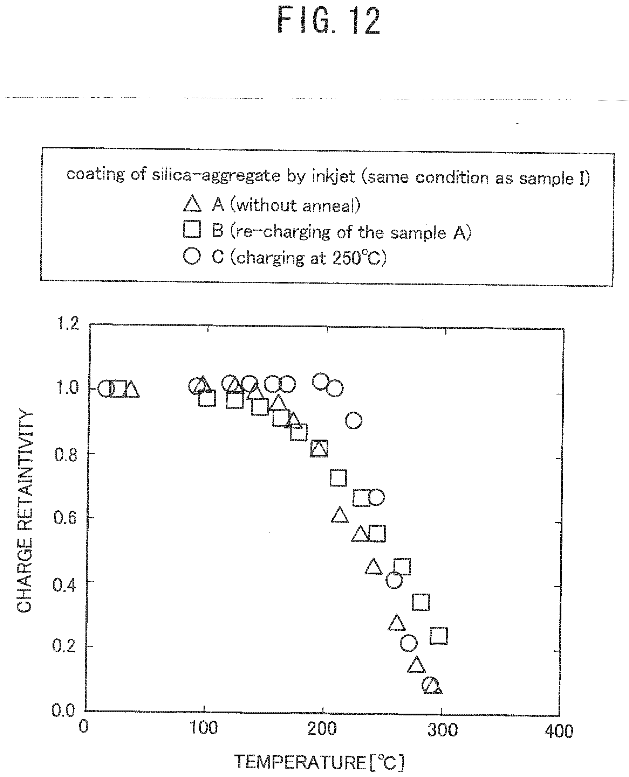

(b). After heating the electret-structure 1 on which the electret-formation process is performed, by performing again the electret-formation process, the charge retention characteristics at high temperature is improved. This reason is as follows. That is, after the first electret-formation process is performed one time, and thereafter, the heating process is performed on the electret, because the negative charges trapped in the deeper trap levels of the silica-aggregate still remain even after being heated, the negative charges are added to the remaining negative charges by the second electret-formation process, and therefore, the charge retention characteristics are improved. Fig. 12 illustrates measured results (by symbols of open triangle) of the charge retaintivity r of the electret-structure 1, in which the inkjet printing was used to coat the silica-aggregates on the fluorine-resin film 21, after the electret-structure 1 was processed one time to become the electret, heating tests up to 300 degrees Celsius were performed on the electret-structure 1. Fig. 12 illustrates further measured results (by symbols of open quadrangle) of the charge retaintivity r of the electret-structure 1, when the sample, which was already processed one time to become the electret and the heating test was already conducted, are again processed to become the electret, and the heating tests up to 300 degrees Celsius were again performed on the electret-structure 1. As can be understood from Fig. 12, by performing the secondary heating process and the secondary electret-formation process, the charge retention characteristics of the electret-structure 1 pertaining to the first embodiment is improved. The heating temperature after the charging process shall be set to be 180 degrees Celsius or more, from which, in Fig. 12, the charge retaintivity r begins to decrease, and also to be 300 degrees Celsius or less, so that the charge retention characteristics at high temperature can be improved. Actually, temperatures of the heating process are desired to be performed between 250 and 260 degrees Celsius, which correspond to the reflow temperatures.

(c). By performing the electret-formation process of the silica-aggregate at higher temperatures, the charge retention characteristics of the electret-structure 1 pertaining to the first embodiment is improved at high temperature, because the negative charges are captured in the deep trap levels of the silica-aggregate by the electret-formation process at high temperature, and because the diffusion of the negative charges becomes difficult. Fig. 12 illustrates the heating test results of the electret-structure 1 by symbols of open circle, when the electret-formation process is performed on the electret-structure 1 at 250 degrees Celsius by the corona-discharge. As can be understood from Fig. 12, by performing the electret-formation process at 250 degrees Celsius, the charge retention characteristics can be improved. On the usual fluorine-resin film 21 on which the silica-aggregates are not coated, the charging process cannot be performed at 250 degrees Celsius. However, when the silica-aggregates are coated on the fluorine-resin film 21, the negative charges can be adsorbed on the silica-aggregates even at temperature of 250 degrees Celsius, and therefore, the electret of the surface potential -1 kV is actually obtained. In the electret-structure 1 pertaining to the first embodiment, even at 300 degrees Celsius just under 310 degrees Celsius that is melting point of the PFA film used as the fluorine-resin film 21, the charging process can be performed to -0.7 kV. When the heating temperature of the charging process is set to be 180 degrees Celsius or more at which the charge retaintivity r begins to decrease in Fig. 12 and also set to be 300 degrees Celsius or less, the charge retention characteristics can be improved at high temperature. Actually, temperatures of the heating process are desired to be performed between 250 and 260 degrees Celsius, which correspond to the reflow temperatures.

(d). By improving the back electrode joined to the fluorine-resin film 21, it is possible to improve the charge retention characteristics at high temperature, with regard to the electret-structure 1 pertaining to the first embodiment. By installing the island-shaped silica regions 201, which are isolated from each other, on the fluorine-resin film 21, it is possible to protect the leakage of the negative charges towards the surface direction, as illustrated in Fig. 26. However, it is impossible to protect holes from being injecting from the back electrode 22. Therefore, in order to improve the charge retention characteristics at high temperature, it is important to protect holes from being injected from the back electrode 22. The reason why holes are injected from the back electrode 22 is roughly classified into two reasons. One of the reasons is the injection of holes through the trap levels, which are ascribable to interfacial defects and impurity layer, and another reason lies in a fact that the surface roughness of the back electrode 22 causes a poor adhesiveness between the fluorine-resin film 21 and the back electrode 22 so as to cause local concentration of the electric fields, which results in the injection of holes.

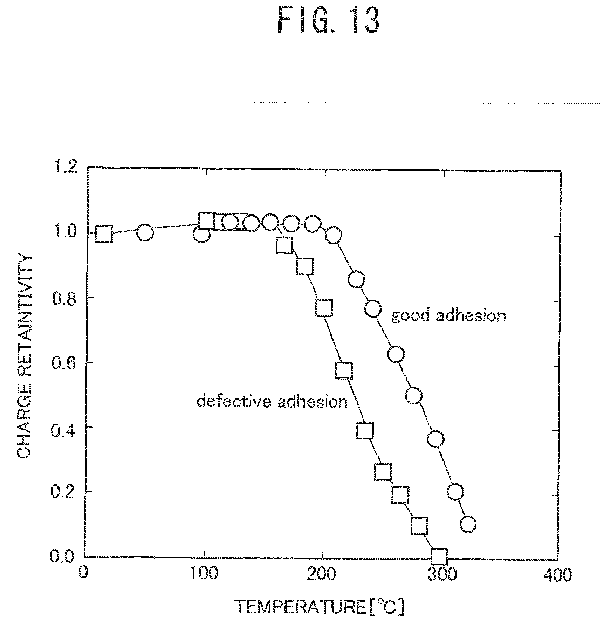

With respect to the adhesiveness between the fluorine-resin film 21 and the back electrode 22, changes in the charge retaintivity r caused by the heating test are illustrated in Fig. 13. In Fig. 13, the change in the charge retaintivity r is shown for samples (symbols of open quadrangle), in which by decreasing the adhesion temperature of the fluorine-resin film 21, defective adhesion portions were intentionally introduced into the electret-structure where the PFA films having a thickness of 12.5 micrometers as the fluorine-resin film 21 were adhered on the Al electrodes as the back electrode 22 by melting, and normal samples indicated by symbols of open circle, which are excellent in adhesion. In Fig. 13, the heating test was carried out in accordance with the temperature-rising characteristics similar to that illustrated in Fig. 7(b). In the defective adhesion samples indicated by symbols of open quadrangle, the charge retaintivity r begins to decrease from 200 degrees Celsius or less. Thus, the adhesiveness of the joint portion between the back electrode 22 and the fluorine-resin film 21 is understood to be important in improving the charge retention characteristics. Three schemes (d-1, d-2 and d-3) for improving the charge retention characteristics at high temperature will be described below.

**(d-1) SMOOTHING OF BACK ELECTRODE (DECREASE IN ELECTRIC FIELD CONCENTRATION:**

(1) After the back electrode 22 is polished to reduce the surface roughness, the fluorine-resin film 21 is adhered or deposited by melting.
(2) Conductive materials (metals such as Al, Ti, Cr, Ni, Ag and the like and carbon) are coated on the fluorine-resin film 21 by vacuum evaporation, physical vapor deposition (PVD) or sputtering so as to form the smooth back electrode 22.

(3) After the smoothing process is performed, through conductive material coating (conductive fluorine resin, carbon and metal such as Al, Ti, Cr, Ni, Ag and the like) on the back electrode 22 by vacuum evaporation, PVD, or sputtering, the fluorine-resin film 21 is adhered or deposited by melting.

In this way, in the electret-structure 1 pertaining to the first embodiment, the smoothing process is desired to be performed on the surface of the back electrode 22, which is formed on one of the surfaces of the fluorine-resin film 21. If the surface of the back electrode 22 implementing the electret-structure 1 is rough, the adhesiveness of the interface between the back electrode 22 and the fluorine-resin film 21 is decreased, which involves the local electric field concentration. With the local electric field concentration, holes are easily injected from the back electrode 22 to the fluorine-resin film 21, and the charge retaintivity of the electret-structure is decreased. By smoothing the surface of the back electrode 22, it is possible to suppress holes from being injected into the fluorine-resin film 21 from the back electrode 22, the injection is caused by the local electric field concentration.

## (d-2) INSULATION COATING (REDUCTION OF DEFECTIVE LAYER):

An insulating material whose heat resistance characteristics is high is coated on the back electrode 22 in advance, and an insulating layer having a good adhesiveness with the back electrode 22 is formed. In order to form the insulating layer, the following methods are considered.

(1) PTFE dispersion or polyimide varnish is coated on the back electrode 22 by spin coating or dipping, and the back electrode 22 is heated to form the insulating layer.
(2) Oxide material (alumina, chrome oxide, titania, zirconia and the like) is coated on the back electrode 22 by vacuum evaporation, PVD, chemical vapor deposition (CVD) or sputtering. And, after the fluorine-resin film 21 is further adhered onto the back electrode 22, the silica layer 20 is coated. In a case of the PTFE coating, the silica layer 20 may be coated directly on the PTFE coated layer.

In this way, in the electret-structure 1 pertaining to the first embodiment, the surface of the back electrode 22, which is formed on one of the surfaces of the fluorine-resin film 21 is desired to be covered with the insulating layer which has the high heat resistance characteristics and the excellent adhesiveness. By coating the insulating layer, which has the excellent adhesiveness, on the back electrode 22 that implements the electret-structure 1, it is possible to reduce the interfacial defects between the back electrode 22 and the fluorine-resin film 21. Also, it is possible to suppress holes from being injected into the fluorine-resin film 21 from the back electrode 22, which is caused by the interfacial defects. When the back electrode 22 is insulation-coated, the electret-structure pertaining to the first embodiment is naturally defined by the fluorine-resin film 21 illustrated in Fig. 1, the back electrode 22, which is formed on the lower surface of the fluorine-resin film 21, the insulating layer arranged between the back electrode 22 and the fluorine-resin film 21, and the silica layer 20 formed on the upper surface of the fluorine-resin film 21.

## (d-3) SIMULTANEOUS CHARGING WITH ADHERING

Prior to adhering the back electrode 22 on the fluorine-resin film 21, the silica-aggregates are coated on the fluorine-resin film 21. After that, the fluorine-resin film 21 is adhered on the back electrode 22 by melting. Then, simultaneously with the adhering, the charging process is performed by the corona-discharge, and the negative charges are deposited. Consequently, it is possible to deposit the negative charges on the deep trap levels of the silica-aggregates coated on the fluorine-resin film 21 where any defect and electric field concentration potions do not exist. By the way, prior to adhering the back electrode 22 on the fluorine-resin film 21, even if the adhering is performed after the charging process is performed by the corona-discharge, the similar effectiveness can be achieved. However, when the charging process performed simultaneously with the adhering, the effectiveness is greater.
A forming method of the island-shaped silica regions 201 will be explained below.

## (1) COATING OF SILICA SOL BY SPRAY:

The example in which the water-soluble silica sol is sprayed and coated on the fluorine-resin film 21 is previously explained (Fig. 4(b)). At that time, the mask 31 is used to regulate the shapes and formation sites of the silica-aggregates. However, as illustrated in Fig. 4(a), by adjusting the sprayed amount from the spray, it is possible to form the isolated silica-aggregates on the fluorine-resin film 21 without using the mask. Since the fluorine resin is high in water repellency, the liquid droplets or mists 201r of the silica sol are deposited on the fluorine resin and becomes the liquid droplets whose shape is close to a ball. Then, when the liquid droplets are dried, the isolated silica-aggregates are formed. Also, in spraying the silica sol, it is possible to use various types such as a spraying nozzle for gardening, a nozzle for spraying paint, a nozzle for generating mists and the like. The nozzle is selected on the basis of a particle diameter. Also, an ultrasonic atomization used in an ultrasonic nebulizer is an effective method.

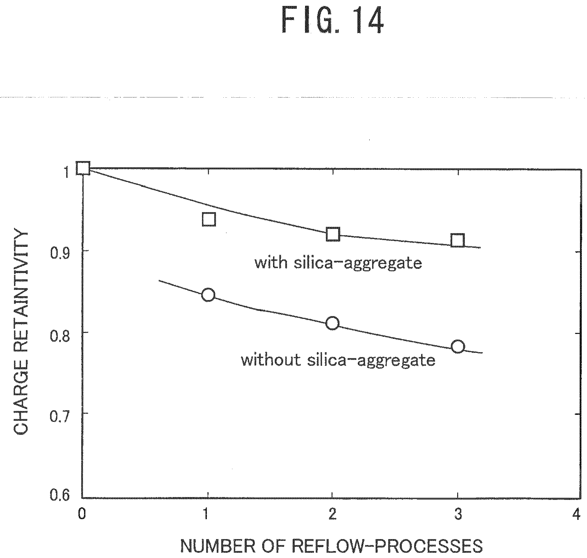

We prepared an electret-structure 1 where the silica-aggregates illustrated in Fig. 2(b) were coated on an electret-structure in which the PTFE with a thickness of 25 micrometers, which serve as the fluorine-resin film 21, was adhered on a stainless steel electrode serving as the back electrode 22 by baking, through the method illustrated in Fig. 4(a) that used the spray gun having a nozzle aperture of 0.3 millimeter and the colloidal silica (NISSAN CHEMICAL INDUSTRIES, LTD, 20L). And, its surface potential was set to 0.4 kV by the corona-discharge. Then, we investigated the behavior of the charge retaintivity r when the reflow tests were repeated similarly to the temperature-increase and temperature-decrease characteristics in Fig. 8. The results are illustrated in Fig. 14. In a sample shown by symbols of open circle, where the silica-aggregate was not coated, the charge retaintivity was lower than 80 % after the execution of triple reflow tests. On the other hand, in the electret-structure 1 shown by symbols of open quadrangle, where the silica layer 20 was formed by coating the silica-aggregates through a spray gun, the charge retaintivity was higher than 90 % even after the execution of the triple reflow tests. From the result, even in a case of the simple method such as the spray gun, pertaining to the electret-structure 1 of the first embodiment, since the silica-aggregates are used to implement the silica layer 20 on the fluorine-resin film 21, the improvement of the charge retaintivity r is shown to be effective.

A primary particle diameter of the silica sol can be selected in a range between four nanometers and 450 nanometers in order to keep the state of the colloidal solution. As the primary particle diameter becomes smaller, the negative charges are more easily collected onto the silica-aggregates simultaneously with charging process through the corona-discharge. Thus, although the coverage can be reduced, the excessive waters inside the aggregate are hard to remove. Hence, the heat treatment or the charging process during the heating operation is required to remove the excessive waters. A height of the silica-aggregate is required to be smaller than a gap width of the ECM pertaining to the first embodiment. Typically, the gap width of the ECM is 25 micrometers or less. The gap width can be increased. However, when the height of the silica-aggregate becomes 50 micrometers or more, the silica-aggregate is easy to disengage from the fluorine-resin film 21 (usually, the silica-aggregates are strongly adhered on the fluorine resin by electrostatic force to form the electret with the silica-aggregates). Also, since the primary particle diameter of the silica sol is four nanometers or more, the height of silica-aggregates cannot be set to be smaller than four nanometers. Moreover, in the colloidal solution, the silica-aggregates already begin to be aggregated. Its size is considered to be between several 100 nanometers and several micrometers. Hence, the height of the aggregate is between four nanometers and 50 micrometers. The height between one micrometer and 25 micrometers is desirable.

By the way, as illustrated in Fig. 4(b), when the mask 31 is placed between the spray nozzle 30 and the fluorine-resin film 21, the isolated silica-aggregates are always dispersed by the mask 31. Thus, it is possible to use not only the water-soluble silica sol but also the silica sol in which organic solvent is used as dispersant. As the organic solvent, ethanol, methanol, acetone, isopropanol, ethylene glycol and the like are listed. When the organic solvent is used, because drying action of the organic solvent is rapid, the heat treatment for removing the excessive waters is not required.

### (2) COATING OF SILICA SOL BY USING ELECTRO SPRAY DEPOSITION (ESD):

As illustrated in Fig. 4(b), when the mask 31 is placed between the spray nozzle 30 and the fluorine-resin film 21, the spray nozzle 30 is set to a negative potential, with respect to the electrode placed at the fluorine-resin film 21. Consequently, the liquid droplets having the negative charges can be adsorbed on the fluorine-resin film 21 so as to form a plurality of island-shaped silica regions 201. This is a method referred to as the electro spray deposition. With the electro spray deposition, it is possible to disperse the plurality of island-shaped silica regions 201 each having a diameter of nano-level. Thus, a precision of a coated pattern of the silica-aggregates can be expected to be improved. Moreover, because the plurality of island-shaped silica regions 201 implemented by the liquid droplets having the negative charges are deposited on the fluorine-resin film 21, the electret-formation process can be carried out simultaneously with the electro spray deposition. By the way, the electro spray deposition (ESD) is also referred to as "an electrostatic spray method" or "an electrostatic coating method".

This method corresponds to the scheme illustrated in Fig. 4(b), in which the spray nozzle 30 or the mist 201r of the splay liquid is set to a negative potential (negative potential with respect of the back electrode 22 attached to the fluorine-resin film 21, on which the silica-aggregates are coated), and further the mask 31, formed by conductor such as a metal plate and the like, is kept at the negative potential. Also, this is a method similar to the electret-formation process through the usual corona-discharge (the surface potential is controlled by discharging the negative charges from a needle electrode and depositing the negative charges through the mask 31 of a certain potential onto the fluorine-resin film 21). For this reason, by correctly setting the potentials of the spray nozzle 30 and the mask 31, it is possible to control both of the coating amount of the island-shaped silica regions 201 implemented by the silica-aggregates on the fluorine-resin film 21 and the surface potential of the electret (usually, the potential of the spray nozzle 30 with respect to the back electrode 22 is set to -1 to -50 kV, and the potential of the mask 31 with respect to the back electrode 22 is set to -0.1 to -5 kV). Also, at this time, a size of the liquid droplets of each mists 201r is determined on the basis of a flow rate of the solution sprayed from the spray nozzle 30, dielectric constant of the solution, temperature and the like. Thus, the size of the mists 201r can be controlled to an order between several nanometers and several millimeters. The silica sol sprayed from the spray nozzle 30 may have one of a water-soluble property and an organic solvent dispersion property.

In the spraying apparatus illustrated in Fig. 4(a), even if the spray nozzle 30 or the spray liquid is set to the negative potential (negative potential with respect to the back electrode 22 attached to the fluorine-resin film 21, on which the silica-aggregates are coated), with the water repellency of the fluorine-resin film 21, the silica sol becomes the mists 201r of the water droplet whose shape is close to a ball and then deposited on the fluorine-resin film 21. In this case, since a size of the silica layer 20 depends on a size of the deposited mists 201r, the size of the silica layer 20 is not uniform. However, the surface potential of the fluorine-resin film 21 is proportional to a product of the coated amount of the coated mists 201r and the potential of the spray nozzle 30 with respect to the back electrode 22. For this reason, without any use of the mask 31, the surface potential can be easily controlled on the basis of the coated amount of the mists 201r and the potential of the spray nozzle 30. Since the use of this method enables the aggregates of nano-level to be coated, the aggregate height can be set to one micrometer or less.

### (3) COATING OF SILICA SOL THROUGH INKJET PRINTING AND SCREEN PRINT:

With the use of the inkjet printing technique and the screen print technique, a pattern of the silica layer 20 implemented by the silica sol liquid droplets can be drawn at any location on the fluorine-resin film 21. By using this method, it is possible to obtain the silica layer 20 implemented by the uniform silica-aggregates. At this time, the silica sol may have one of the water repellent property and the organic solvent dispersion property.

### (4) FORMATION OF ISLAND-SHAPED SILICA REGION 201 HAVING THIN FILM SHAPE THROUGH VACUUM EVAPORATION, PVD, CVD OR SPUTTERING:

By using a silica coating technique used in a gas barrier film, it is possible to form the island-shaped silica region 201 having the thin film shape. The island-shaped silica region 201 having the thin film shape may be formed on the fluorine-resin film 21 masked by vacuum evaporation, PVD, CVD or sputtering. Fig. 3(b) schematically illustrates a relation between the island-shaped silica regions 201 each having the thin film shape formed by this method, the fluorine-resin film 21 and the back electrode 22. However, in this case, as compared with the silica-aggregate, the adsorbed water is little, which disables the negative charges to be selectively deposited only on the silica layer 20 simultaneously with charging process. For this reason, the coverage Rs is required to be high, and the Rs = 80 to 90 % is desirable. By the way, if a porous film of silica can be formed, the adsorbed water to the silica layer 20 is increased, which enables the negative charges to be selectively deposited on the silica layer 20.

The height of the island-shaped silica region 201 having the thin film shape is required to be one nanometer or more because a band gap structure of silica is required to be formed. Also, the method in which the island-shaped silica region 201 having the thin film shape whose thickness exceeds ten micrometers is formed by vacuum evaporation, PVD, CVD or sputtering is not practical or realistic because the manufacturing method with vacuum evaporation, PVD, CVD or sputtering requires a very long time. Thus, the height of the island-shaped silica region 201 is between one nanometer and ten micrometers, and the height between one nanometer and one micrometer is desirable. Also, in this case, the island-shaped silica region 201 having the thin film shape is required to be coated so that the product of the coverage and the coating area (Rs $\times$ As) becomes 0.5 mm$^2$ or less.

In the electret-structure 1 pertaining to the first embodiment, the island-shaped silica region 201 having the thin film shape is desired to be the porous film. Since the porous film is large in surface area, the large amount of the water molecules are adsorbed on the surface, and the apparent dielectric constant is increased. As a result, when it is made into the electret by the corona-discharge or plasma discharge, the electric fields are concentrated onto the island-shaped silica regions 201 each having the thin film shape implemented by the porous film. Thus, the negative charges can be selectively deposited on the island-shaped silica regions 201.

As mentioned above, according to the electret-structure 1 of the static-induction conversion element pertaining to the first embodiment, even if the electret-structure 1 is exposed to undergo the reflow temperature of the Pb-free solder, the high charge retaintivity r can be kept. For this reason, the static-induction conversion element pertaining to the first embodiment that has the electret-structure 1 can be mounted on a substrate by the reflow-process which uses the Pb-free solder. Also, in the electret-structure 1 pertaining to the first embodiment, since the negative charges are trapped in the deep levels of the island-shaped silica regions 201, the charges do not diffuse into the fluorine-resin film 21, and the high charge retaintivity r can be consequently kept. For this reason, the maximum allowable displacement of the static-induction conversion element that has the electret-structure 1 is improved.

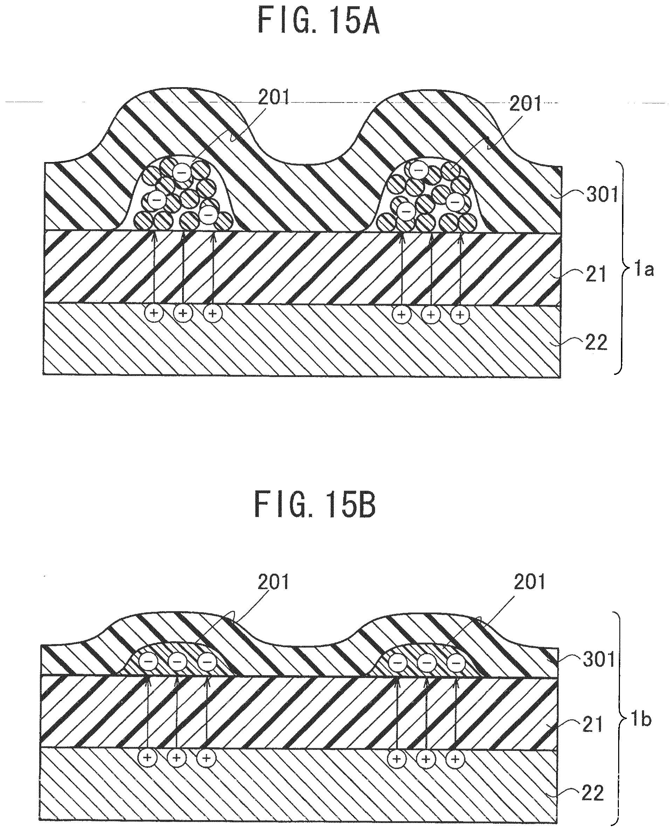

A disengage protection scheme of the island-shaped silica region 201 from the fluorine-resin film 21 will be described below by using first and second variations of the first embodiment recited in the present invention, which are illustrated in Fig. 15. Since the negative charges are deposited on the island-shaped silica regions 201 for coating the fluorine-resin film 21, the strong electrostatic force is established through the fluorine-resin film 21 between the island-shaped silica regions 201 and the back electrode 22. For example, when a thickness of the fluorine-resin film 21 is 12.5 micrometers, a relative dielectric constant is 2.2 and a surface potential is -1 kV, the electrostatic force of 124 kPa or more is established on the island-shaped silica region 201 (the electrostatic force is represented by a product of a dielectric constant and a square of an electric field magnitude). Since the island-shaped silica region 201 is adsorbed by the foregoing strong electrostatic force, the island-shaped silica region 201 is not disengaged by impact such as the vibration in a daily life or a falling accident. In spite of the foregoing situation, if a large impact provoking a fear of disengagement of the island-shaped silica region 201 is applied, as illustrated in Fig. 15(a), the disengagement can be protected by laminating a covering film 301 made of fluorine resin on the island-shaped silica regions 201 implemented by the silica-aggregates.

As illustrated in the variation (the first variation) in the first embodiment of the present invention illustrated in Fig. 15(a), the covering film 301 for covering the surface of the fluorine-resin film 21 where the silica layer 20 implemented by the island-shaped silica regions 201 is formed is provided. Then, when the covering film 301 is adhered on the upper surface of the island-shaped silica region 201 and the upper surface (surface) of the fluorine-resin film 21 between the island-shaped silica regions 201, in the electret-structure 1a, the strong electrostatic force is established through the fluorine-resin film 21 between the back electrode 22 and the island-shaped silica region 201 on which the negative charges are deposited. Thus, there is no fear that with the vibration in the daily life and the impact such as the falling accident, the island-shaped silica region 201 is disengaged from the fluorine-resin film 21. Irrespectively of the foregoing situation, when the impact having the fear of the disengagement of the island-shaped silica region 201 is applied, the disengagement can be protected by laminating the covering film 301, such as the fluorine resin and the like, on the fluorine-resin film 21 where the silica layer 20 is formed.

In the first variation of the first embodiment illustrated in Fig. 15(a), the electret-structure 1a is defined by the fluorine-resin film 21, the back electrode 22, which is formed on the lower surface of the fluorine-resin film, the island-shaped silica regions 201 for implementing the silica layer 20 formed on the upper surface of the fluorine-resin film 21, and the covering film 301 for covering the island-shaped silica regions 201.

The covering film 301 laminated on the island-shaped silica regions 201 may be merely laminated on the fluorine-resin film 21 as the base material, and the covering film 301 and the fluorine-resin film 21 may contact with each other in a dry state. Also, the covering film 301 and the fluorine-resin film 21 may be adhered to each other by heating. Also, when it is made into the electret, after the island-shaped silica regions 201 implemented by the silica-aggregates are coated on the fluorine-resin film 21 of the base material, the charging process through the corona-discharge is performed, and then, the negative charges are deposited on the island-shaped silica regions 201, and the covering film 301 may be laminated. Or, after the covering film 301 is laminated, the charging process is performed, and after the negative charges are deposited on the laminated covering film 301, the negative charges may be heated at 150 degrees Celsius to 300 degrees Celsius, and consequently the negative charges diffuse and deposited on the island-shaped silica regions 201.

In the covering film 301 having no electrode, holes (positive charges) begin to diffuse at a temperature zone over 150 degrees Celsius. On the surface of the covering film 301 that contacts with the island-shaped silica region 201, the negative charges diffuse into the island-shaped silica regions 201 and the negative charges are neutralized by holes (positive charges) remaining on the surface of the fluorine resin. For this reason, with the heating operation, when holes diffuse, only the negative charges diffused in the island-shaped silica regions 201 are left. Or, by the charging process through the corona-discharge while heating the negative charges at 150 degrees Celsius to 300 degrees Celsius, the negative charges can diffuse into the island-shaped silica regions 201 implemented by the silica-aggregates.

Also, as illustrated in Fig. 15(b), when the island-shaped silica regions 201 are formed by the vacuum evaporation or the sputtering, the fear of the disengagement of the island-shaped silica region 201 is further reduced. However, the covering film 301 made of the fluorine resin may be laminated on the island-shaped silica regions 201 by the foregoing method. Even in the variation (second variation) in the first embodiment of the present invention illustrated in Fig. 15(b), similarly to the first variation illustrated in Fig. 15(a), an electret-structure 1b is defined by the fluorine-resin film 21, the back electrode 22, which is formed on the lower surface of the fluorine-resin film, the island-shaped silica regions 201 for implementing the silica layer 20 formed on the upper surface of the fluorine-resin film 21, and the covering film 301 for covering the island-shaped silica regions 201. Also, in the electret-structure 1b pertaining to the second variation of the first embodiment, after the formation of the island-shaped silica regions 201, a PTFE dispersion (AD911L made by ASAHI KASEI CORPORATION and the like) may be coated by spin coating, dipping, spray coating or the like, and then heated, thereby forming the covering film 301 made of PTFE film.

By the way, although Fig. 1 has illustrated a case that the electrode of the electret-structure 1 is the back electrode 22, as illustrated in Fig. 16, an electrode of an electret-structure 1c may be the vibration electrode 10. In the variation (third variation) in the first embodiment of the present invention illustrated in Fig. 16, the electret-structure 1c is defined by the fluorine-resin film 21, the vibration electrode 10 formed on the upper surface of the fluorine-resin film 21, and the silica layer 20 formed on the lower surface of the fluorine-resin film 21. In the electret-structure 1c pertaining to the third variation of the first embodiment, the silica layer 20 formed on the lower surface of the fluorine-resin film 21 is implemented by the plurality of island-shaped silica regions 201 which are isolated from each other and coated on the fluorine-resin film 21. As can be understood from the third variation of the first embodiment illustrated in Fig. 16, "the electrode formed on one of the surfaces of the fluorine-resin film" that defines a part of the configuration of "the electret-structure" in the present invention may be the vibration electrode or the back electrode.

**(SECOND EMBODIMENT)**

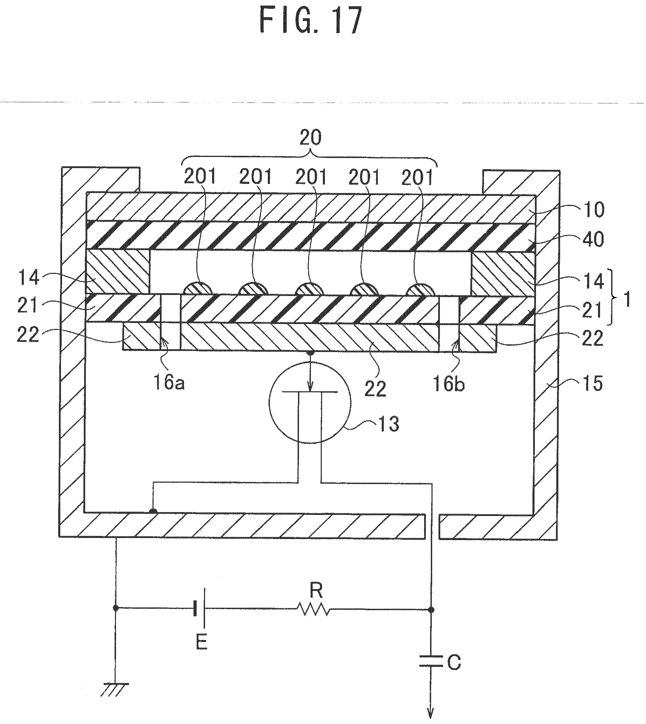

As illustrated in Fig. 17, a static-induction conversion element (ECM) pertaining to a second embodiment of the present invention is a microphone capsule that contains, a vibration electrode (vibrator) 10 implemented by conductor which has a flat vibration surface, an insulating layer 40 arranged on a lower surface of the vibration electrode 10, a fluorine-resin film 21 defined by a flat first main surface opposite to the insulating layer 40 and a second main surface parallel and opposite to the first main surface, a silica layer 20 formed on a upper surface (the first main surface) of the fluorine-resin film 21, wherein its polarization directions are aligned, a back electrode 22 joined to a lower surface (the second main surface) of the fluorine-resin film 21, and a static-induction charge-measurement means (13, R, C and E) for measuring charges induced between the vibration electrode 10 and the back electrode 22 in association with the displacement of the vibration electrode of the vibration electrode 10. The silica layer 20 is implemented by the plurality of island-shaped silica regions 201 implemented by the silica-aggregates that are adhered on the fluorine-resin film 21 in a topology such that the island-shaped silica regions 201 are isolated from each other. However, the polarization directions within the fluorine-resin film 21 that are oriented toward the respective lower surfaces of the plurality of island-shaped silica regions 201 from the back electrode 22 are aligned.

Similarly to the ECM pertaining to the first embodiment, even in the ECM pertaining to the second embodiment, "the electret-structure" is defined by the whole of the laminated structure, as illustrated in Fig. 17, and the electret-structure contains the fluorine-resin film 21, the back electrode 22, which is formed on the lower surface of the fluorine-resin film, and the silica layer 20 formed on the upper surface of the fluorine-resin film 21. However, only a configuration in which the insulating layer 40 is formed on the side facing to the island-shaped silica regions 201 of the vibration electrode 10 is different, as compared with the configuration of the ECM pertaining to the first embodiment illustrated in Fig. 1. The other features such as the configurations that the apertures 16a and 16b penetrate to a gap space defined between the fluorine-resin film 21 and the vibration electrode 10 are cut in the fluorine-resin film 21 and the back electrode 22 so as not to suppress the vibration of the vibration electrode 10 and that the electret-structure 1 and the vibration electrode 10 are accommodated in the metallic case 15 are similar to the ECM pertaining to the first embodiment. Thus, the duplicative explanations are omitted.

In the ECM pertaining to the second embodiment illustrated in Fig. 17, even if the excessive sound pressure causes the vibration electrode 10 and the insulating layer 40 to be greatly distorted and consequently causes the island-shaped silica regions 201 implemented by the silica-aggregates to be brought into contact with the insulating layer 40, the negative charges captured by deep trap levels of the island-shaped silica regions 201 never diffuse into the insulating layer 40. Similarly to the case of the heating test for the electret-structure 1 pertaining to the first embodiment explained in Fig. 7(a), even in the electret-structure 1 pertaining to the second embodiment, the negative charges on the fluorine-resin film 21 are leaked at 260 degrees Celsius. However, the negative charges in the silica-aggregates that implement the island-shaped silica regions 201 are not leaked. This is because even in the electret-structure 1 pertaining to the second embodiment, the negative charges are captured by deep trap levels of the silica-aggregates that implement the island-shaped silica regions 201. As a result, the negative charges never diffuse into the fluorine-resin film 21.

For this reason, according to the ECM of the second embodiment, it is possible to manufacture a microphone capsule whose maximum allowable sound pressure is improved. Typically, the ECM is deteriorated because the sound pressure causes the vibration electrode 10 to be brought into contact with the fluorine-resin film 21 serving as the electret, and the negative charges are leaked. For this reason, the maximum allowable sound pressure of the ECM is defined as the sound pressure that does not involve the foregoing contact. However, in the ECM pertaining to the second embodiment illustrated in Fig. 17, even if the insulating layer 40 arranged on the lower surface of the vibration electrode 10 collides with the island-shaped silica regions 201, the negative charges deposited on the island-shaped silica regions 201 never diffuse into the insulating layer 40. Thus, the ECM is not deteriorated. For this reason, according to the ECM of the second embodiment, the maximum allowable sound pressure can be greatly improved.

The insulating layer 40 of the ECM pertaining to the second embodiment is required to be made of materials having the high heat resistance characteristics that can endure the reflow temperature. In order to form the insulating layer 40 of the ECM pertaining to the second embodiment, the following methods are considered:

(1) The vibration electrode 10 is deposited on the film such as fluorine resin, PPS (Poly-Phenylene Sulfide), PEN (Poly-Ethylene Naphthalate) and the like, and it is formed by the PVD or the sputtering, and the film is used as the insulating layer 40.

(2) The fluorine-resin film 21 is adhered onto the vibration electrode 10.

(3) The PTFE dispersion or the polyimide varnish is coated on the vibration electrode 10 by the spin coating or dipping, and then heated, thereby forming the insulating layer 40.

(4) The oxide material (alumina, chrome oxide, titania, zirconia and the like) is coated on the vibration electrode 10 by vacuum evaporation, PVD, CVD or sputtering.

As mentioned above, according to the electret-structure 1 of the second embodiment, even if the electret-structure 1 is exposed to the reflow temperature of the Pb-free solder, the high charge retaintivity r can be kept. For this reason, the static-induction conversion element pertaining to the second embodiment that has the electret-structure 1 can be mounted on the substrate by the reflow-process which uses the Pb-free solder. Also, in the electret-structure 1 pertaining to the second embodiment, the negative charges are trapped in the deep levels of the island-shaped silica regions 201. Thus, even if the insulating layer 40 on the side of the vibration electrode 10 is brought into strong collision with the island-shaped silica regions 201, the negative charges do not diffuse into the insulating layer 40, and the high charge retaintivity r can be kept. For this reason, the static-induction conversion element that has the electret-structure 1 can correspond to even the great displacement in such a way that the insulating layer 40 on the side of the vibration electrode 10 collides with the island-shaped silica regions 201. Hence, the maximum allowable displacement of the static-induction conversion element is improved by using the electret-structure 1 pertaining to the second embodiment.

**(THIRD EMBODIMENT)**

As illustrated in Fig. 18, a static-induction conversion element (ECM) pertaining to a third embodiment of the present invention is a microphone capsule that contains a vibration electrode (vibrator) 10 implemented by conductor which has a flat vibration surface, a fluorine-resin film 21 defined by a flat upper surface opposite to the vibration surface of the vibration electrode 10 and a lower surface parallel and opposite to this upper surface, a plurality of island-shaped silica regions 201 formed on the upper surface of the fluorine-resin film 21, a back electrode 22 joined to the lower surface of the fluorine-resin film 21, and a static-induction charge-measurement means (13, R, C and E) for measuring charges induced between the vibration electrode 10 and the back electrode 22 in association with the displacement of the vibration electrode of the vibration electrode 10. The plurality of island-shaped silica regions 201, which are isolated from each other and adhered on the fluorine-resin film 21, configure a silica layer. However, the polarization directions within the fluorine-resin film 21 that are oriented toward the respective lower surfaces of the plurality of island-shaped silica regions 201 from the back electrode 22 are aligned.

Even in the ECM pertaining to the third embodiment, similarly to the ECM pertaining to the first and second embodiments, "the electret-structure" is defined by the whole of the laminated structure as illustrated in Fig. 18, which contains the fluorine-resin film 21, the back electrode 22, which is formed on the lower surface of the fluorine-resin film, and the plurality of island-shaped silica regions 201 formed on the upper surface of the fluorine-resin film 21. However, only a configuration in which a distribution density of the island-shaped silica regions 201 implemented by the silica-aggregates on the fluorine-resin film 21 is not uniform is different, as compared with the configuration of the ECM pertaining to the first and second embodiments. However, the other features, such as the configurations that the electret-structure 1 and the vibration electrode 10 and the like are accommodated in the metallic case 15 and the like, are similar to the ECM pertaining to the first embodiment illustrated in Fig. 1. Thus, the duplicative explanations are omitted.

In the ECM in which the distribution density of the island-shaped silica regions 201 on the fluorine-resin film 21 is uniform such as the ECM pertaining to the first embodiment illustrated in Fig. 1, because a center of the vibration electrode 10 is greatly distorted, and its gap width is made narrow, only the center becomes an effective area as the ECM. On the contrary, in the ECM pertaining to the third embodiment illustrated in Fig. 18, a surface density of the island-shaped silica regions 201 implemented by the silica-aggregates in a periphery is made higher than that of the center, which causes the electric field in the periphery to be higher than that of the center and also causes the distortion of the periphery of the vibration electrode 10 to be greater.

As a result, according to the ECM of the third embodiment, the effective area as the ECM is wide, and an electrostatic capacitance between gaps is increased as compared with the configuration of the ECM pertaining to the first embodiment illustrated in Fig. 1. For this reason, the noise can be reduced, which leads to the improvement of a sensitivity. Also, the electrostatic capacitance per area is increased, which enables the ECM to be miniaturized. In this way, in the electret-structure 1 pertaining to the third embodiment, by controlling the formed pattern of the silica-aggregates that implement the plurality of island-shaped silica regions 201, it is possible to control a potential distribution of the electret-structure 1.

As mentioned above, according to the electret-structure 1 of the third embodiment, even if the electret-structure 1 is exposed to the reflow temperature of the Pb-free solder, the high charge retaintivity r can be kept. For this reason, the static-induction conversion element pertaining to the third embodiment that has the electret-structures (201, 21 and 22) can be mounted on the substrate by the reflow-process which uses the Pb-free solder Also, in the electret-structure 1 pertaining to the third embodiment, the negative charges are trapped in the deep levels of the island-shaped silica regions 201. Thus, the negative charges do not diffuse into the fluorine-resin film 21, and the high charge retaintivity r can be kept. For this reason, the maximum allowable displacement of the static-induction conversion element that has the electret-structure 1 is improved.

**(FOURTH EMBODIMENT)**

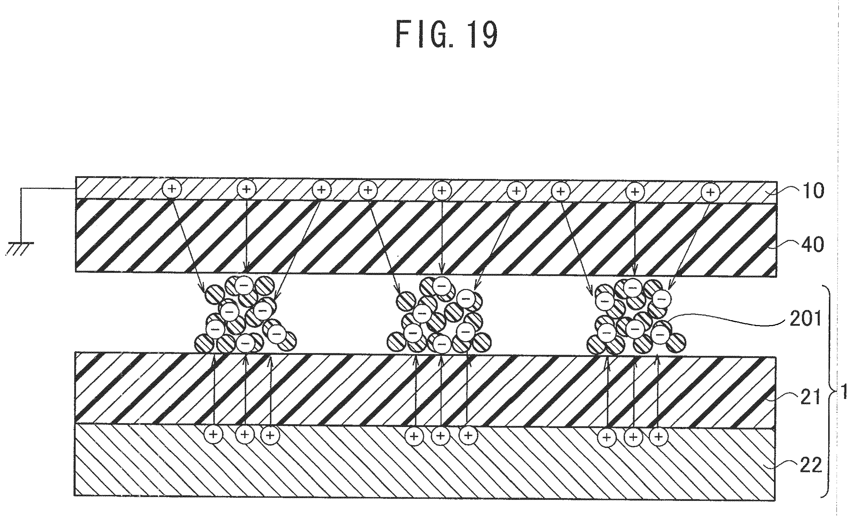

As illustrated in Fig. 19, a static-induction conversion element (ECM) pertaining to a fourth embodiment of the present invention contains a vibration electrode (vibrator) 10 implemented by conductor which has a flat vibration surface, an insulating layer 40 arranged on the lower surface of the vibration electrode 10, a fluorine-resin film 21 defined by a flat upper surface opposite to the insulating layer 40 and a lower surface parallel and opposite to the flat upper surface, a plurality of island-shaped silica regions 201 formed on the upper surface of the fluorine-resin film 21, and a back electrode 22 joined to the lower surface of the fluorine-resin film 21. The plurality of island-shaped silica regions 201 are adhered on the fluorine-resin film 21 in a topology such that the island-shaped silica regions 201 are isolated from each other, Each of the island-shaped silica regions 201 is implemented by the silica-aggregate, and the silica layer is deposited on the fluorine-resin film 21. However, the polarization directions within the fluorine-resin film 21 that are oriented toward the respective lower surfaces of the plurality of island-shaped silica regions 201 from the back electrode 22 are aligned. Although the illustration is omitted, static-induction charge-measurement means encompasses FET and the like, for measuring the charges which are induced between the vibration electrode 10 and the back electrode 22 in association with the displacement of the vibration surface of the vibration electrode 10.

Similarly to the ECM pertaining to the first to third embodiments, even in the ECM pertaining to the fourth embodiment, "the electret-structure" is defined by the whole of the laminated structure as illustrated in Fig. 17, and the electret-structure contains the fluorine-resin film 21, the back electrode 22, which is formed on the lower surface of the fluorine-resin film, and the plurality of island-shaped silica regions 201 formed on the upper surface of the fluorine-resin film 21. The ECM pertaining to the fourth embodiment is assembled similarly to the ECM pertaining to the second embodiment illustrated in Fig. 17, with regard to an arrangement in which the insulating layer 40 is formed on the lower surface of the vibration electrode 10. However, a configuration in which the island-shaped silica regions 201 formed on the fluorine-resin film 21 are also used as a spacer for keeping an interval between the insulating layer 40 on the side of the vibration electrode 10 and the fluorine-resin film 21 differs from the ECM pertaining to the second embodiment.

In the ECM pertaining to the fourth embodiment, the negative charges captured by deep trap levels of the island-shaped silica regions 201 never diffuse into the insulating layer 40, even if the island-shaped silica region 201 collides with the insulating layer 40. Thus, the ECM pertaining to the fourth embodiment can establish an extremely narrow gap (micro gap) between the vibration electrode 10 and the back electrode 22, and The ECM is excellent in pressure resistance characteristics. For this reason, the static-induction conversion element pertaining to the fourth embodiment can be applied not only to the ECM but also to a detection device for detecting an ultrasonic wave and the like and can correspond to a wide band.

The ECM pertaining to the fourth embodiment is manufactured as follows. The insulating layer 40 made of the fluorine-resin film and the like is formed on the side of the gap space of the vibration electrode 10. Next, the fluorine-resin film 21 is adhered to the back electrode 22, and the island-shaped silica regions 201 are formed on the fluorine-resin film 21. Then, the charging process is performed by the corona-discharge. Next, with the island-shaped silica regions 201 as the spacer, the vibration electrode 10 where the insulating layer 40 is formed is laminated, and the ECM is assembled. By the way, the island-shaped silica regions 201 may be formed on the insulating layer 40 on the side of the vibration electrode 10.

All of the configurations of the ECM pertaining to the fourth embodiment illustrated in Fig. 19 are made of the fluorine-resin film and folded, which can manufacture an acceleration sensor that is high in performance and thin and flexible. The manufacturing example of a concrete flexible acceleration sensor will be described below.

Each of the vibration electrode 10 and the back electrode 22 was assumed to be an Al film having a thickness of ten micrometers. Each of the insulating layer 40 and the fluorine-resin film 21 was assumed to be a PFA film having a thickness of 12.5 micrometers. The insulating layer 40 made of the PFA film was adhered to the vibration electrode 10 made of the Al film, and the fluorine-resin film 21 made of the PFA film was adhered to the back electrode 22 made of the Al film. The island-shaped silica regions 201 implemented by the silica-aggregates were coated on the fluorine-resin film 21 by the inkjet printing, under the procedure and condition that were similar to those of the sample I in Fig. 7.

Then, the charging process was performed on the electret-structure 1 by the corona-discharge, and its surface potential was set to -1 kV. And, the electrode layers (10 and 40) opposite to the electret-structure 1 were laminated, thereby achieving a flexible architecture having a size of $40 \times 40$ millimeters as illustrated in Fig. 20(a). As illustrated in Fig. 20(a), the flexible architecture contains a vibration electrode (vibrator) 10, an insulating layer 40 installed on the lower surface of the vibration electrode 10, a fluorine-resin film 21 opposite to the insulating layer 40, a plurality of island-shaped silica regions 201 formed on the upper surface of the fluorine-resin film 21, and a back electrode 22 joined to the lower surface of the fluorine-resin film 21.

After that, moreover, a copper tape was used to install a back electrode side extraction electrode 51 on a part of the back electrode 22. Then, as illustrated in Fig. 20(a), in such a way that the side of the back electrode 22 was interfolded, through a first fold line I-I, a sensor having the size of 40×40 millimeters was folded in two and adhered to each other by using a double-faced tape 52. Then, the results in a size of 40×20 millimeters illustrated in Fig. 20(b). Moreover, as illustrated in Fig. 20(b), through a second fold line II-II, a sensor having the size of 40×20 millimeters is folded in two and adhered to each other by using a double-faced tape 53. Finally, they are folded in four, and miniaturized to a size of 20×20 millimeters, as illustrated in Fig. 20(c).

Then, a copper tape was used to arrange a vibration electrode side extraction electrode 54 on the vibration electrode 10. Then, in order to protect the surface, a PP tape having a thickness of 40 micrometers was adhered to the surface. Consequently, a conversion element 64 pertaining to the fourth embodiment was manufactured.

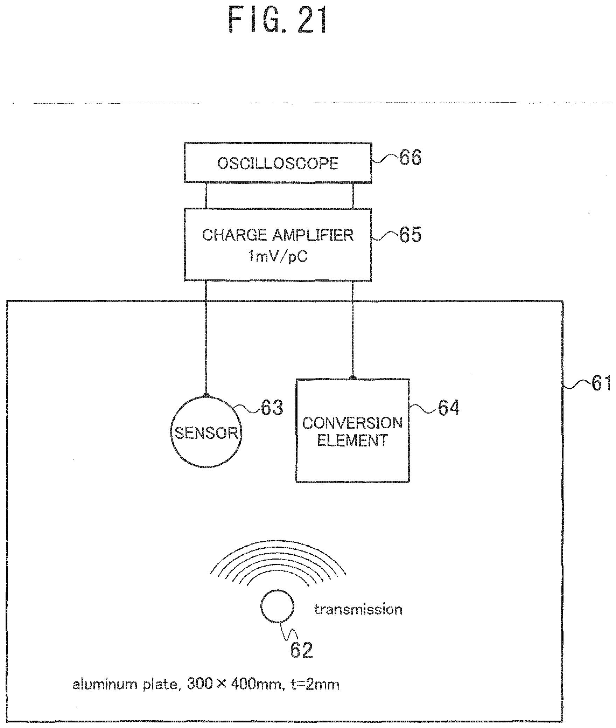

This conversion element 64, which has already been folded in four, pertaining to the fourth embodiment was used as the acceleration sensor, and a measurement was performed as illustrated in Fig. 21. The conversion element 64 pertaining to the fourth embodiment and a commercial acceleration sensor 63 (FUJI CERAMICS CORPORATION, S2SG) were attached to a position that was symmetrical with respect a vibration generation point 62, on an aluminum plate 61 which was 300×400 millimeters in size and two millimeters in thickness. Respective outputs of the conversion element 64 pertaining to the fourth embodiment and the commercial acceleration sensor 63 were connected through a charge amplifier 65 to an oscilloscope 66. And, the vibration generation point 62 of the aluminum plate 61 was hit by hand, or a rubber ball or iron ball was dropped onto the vibration generation point 62 of the aluminum plate 61, or the vibration generation point 62 of the aluminum plate 61 was vibrated by a piezo actuator. Consequently, the vibration between 1 Hz and 100 kHz was generated at the vibration generation point 62 of the aluminum plate 61. Then, an acceleration speed on the surface of the aluminum plate 61 at that time was measured.

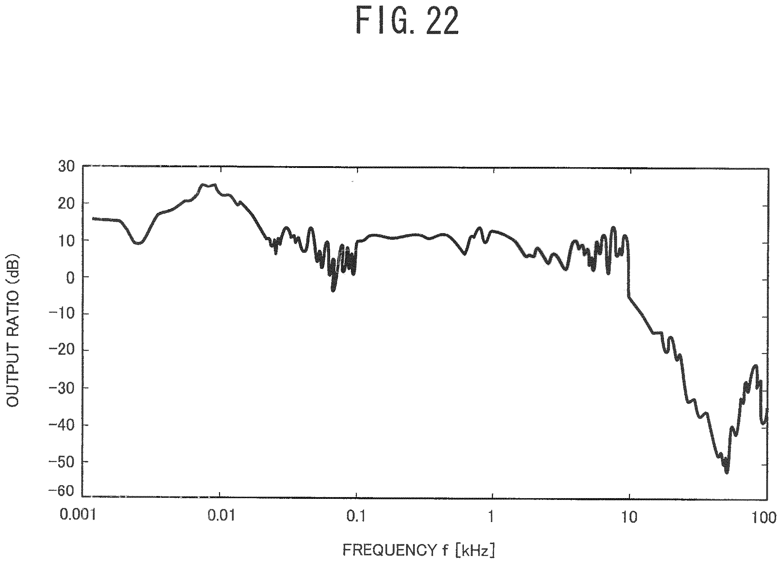

The result is illustrated in Fig. 22. Fig. 22 illustrates a frequency characteristics with regard to an output ratio of the conversion element 64 manufactured pertaining to the fourth embodiment to the commercial acceleration sensor 63. However, between 1 Hz and 10 kHz, the sensitivity of the conversion element 64 pertaining to the fourth embodiment is understood to be higher than that of the commercial acceleration sensor 63, and the average output ratio was 10 dB.

Although a volume of the commercial acceleration sensor 63 is 123 mm$^3$, a volume of the conversion element 64 manufactured pertaining to the fourth embodiment is 200 mm$^3$. Thus, although the conversion element 64 is slightly large, the conversion element 64 is sufficiently miniaturized. Also, since a thickness of the conversion element 64 pertaining to the fourth embodiment is 0.5 millimeter, the conversion element 64 can be easily deformed. The conversion element 64 pertaining to the fourth embodiment can be attached to a curved surface and the like. The commercial acceleration sensor 63 is required to use a fixing tool such as a screw and the like when it is attached. However, the conversion element 64 pertaining to the fourth embodiment can be strongly attached by using the double-faced tape.

As mentioned above, in accordance with the electret-structure 1 of the fourth embodiment, even if the electret-structure 1 is exposed to the reflow temperature of the Pb-free solder, the high charge retaintivity r can be kept. For this reason, the static-induction conversion element pertaining to the fourth embodiment that has the electret-structure 1 can be mounted on the substrate by the reflow-process which uses the Pb-free solder. Also, in the electret-structure 1 pertaining to the fourth embodiment, the negative charges are trapped in the deep levels of the island-shaped silica regions 201. Thus, even if the insulating layer 40 provided on the side of the vibration electrode 10 is brought into strong collision with the island-shaped silica regions 201, the negative charges do not diffuse into the insulating layer 40, and the high charge retaintivity r can be kept. For this reason, the static-induction conversion element that has the electret-structure 1 pertaining to the fourth embodiment can allow a greater displacement in such a way that the insulating layer 40 on the side of the vibration electrode 10 collides with the island-shaped silica regions 201. Hence, the maximum allowable displacement of the static-induction conversion element is improved by using the electret-structure 1 pertaining to the fourth embodiment.

Moreover, the conversion element 64 pertaining to the fourth embodiment can be manufactured at a cost similar to the cost of commercial ECM. Thus, in the conversion element 64 pertaining to the fourth embodiment, the cost can be greatly reduced as compared with the commercial acceleration sensor 63. In this way, by using the configuration of the static-induction conversion element pertaining to the fourth embodiment illustrated in Fig. 19, it is possible to manufacture the acceleration sensor that is high in performance and low cost. Also, when an AC voltage is applied to the static-induction conversion element pertaining to the fourth embodiment, the static-induction conversion element is vibrated by the electrostatic force. Thus, the static-induction conversion element of the fourth embodiment can be used as a speaker. According to the static-induction conversion element of the fourth embodiment, the electret-structure 1 causes a high electric field to be acted on gap portion. Hence, it is possible to obtain the electrostatic force that is extremely great, as compared with an electrostatic speaker which does not use the electret-structure 1.

(FIFTH EMBODIMENT)

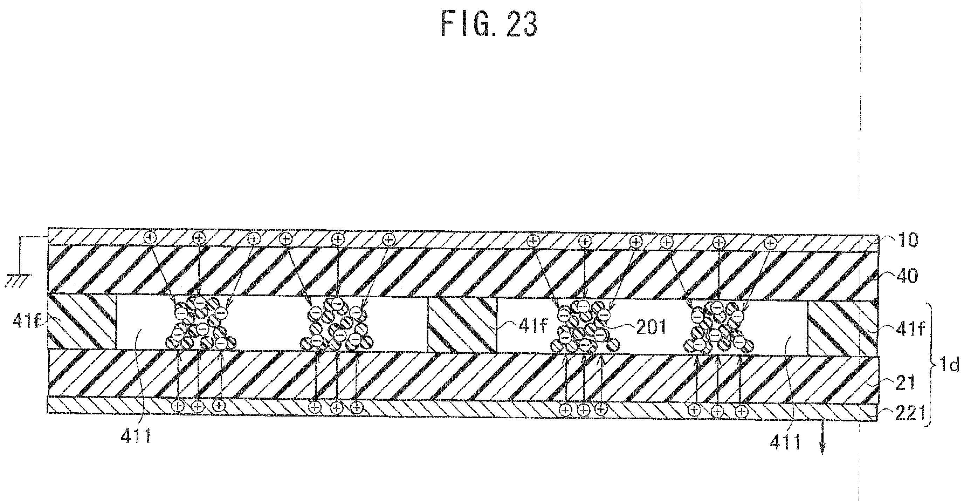

As illustrated in Fig. 23, a static-induction conversion element (ECM) pertaining to a fifth embodiment of the present invention contains a vibration electrode (vibrator) 10 implemented by conductor which has a flat vibration surface, an insulating layer 40 arranged on a lower surface of the vibration electrode 10, a fluorine-resin film 21 defined by a flat upper surface opposite to the insulating layer 40 and a lower surface parallel and opposite to the flat upper surface, a plurality of island-shaped silica regions 201 formed on the upper surface of the fluorine-resin film 21, and a back electrode 22 joined to the lower surface of the fluorine-resin film 21. The plurality of island-shaped silica regions 201 are adhered on the fluorine-resin film 21 in a topology such that the island-shaped silica regions 201 are isolated from each other, Each of the island-shaped silica regions 201 is implemented by the silica-aggregate, and the silica layer is deposited on the fluorine-resin film 21. However, the polarization directions within the fluorine-resin film 21 that are oriented toward the respective lower surfaces of the plurality of island-shaped silica regions 201 from the back electrode 22 are aligned.

Although the illustration is omitted, the static-induction charge-measurement means encompasses FET and the like, for measuring the charges which are induced between the vibration electrode 10 and the back electrode 22 in association with the displacement of the vibration surface of the vibration electrode 10. Similarly to the ECM pertaining to the first to fourth embodiments, even in the ECM pertaining to the fifth embodiment, "an electret-structure 1d" is defined by the whole of the laminated structure illustrated in Fig. 23, which contains the fluorine-resin film 21, a back electrode 221 formed on the lower surface of the fluorine-resin film, and the silica layer implemented by the plurality of island-shaped silica regions 201 formed on the upper surface of the fluorine-resin film 21.

The ECM pertaining to the fifth embodiment is assembled substantially similar to the ECM pertaining to the fourth embodiment illustrated in Fig. 19. However, differently from the ECM pertaining to the fourth embodiment illustrated in Fig. 19, a thickness of the back electrode 221 is set to a thickness approximately equal to that of the vibration electrode 10, and the flexible ECM is provided. Also, spacer layers 41f made of fluorine-resin film are provided so as to divide a gap space between the fluorine-resin film 21 and the insulating layer 40, and a plurality of spaces are assigned in the gap space, and hollow portions 411 are defined. Then, the island-shaped silica regions 201 implemented by the silica-aggregates which doubly serves as the spacers are arranged at positions of the hollow portions 411 defined by the spacer layers 41f. The spacer layers 41f made of the fluorine-resin film are installed in order to protect a possibility of generation of large misalignment between the vibration electrode 10 and the back electrode 221 when the ECM is curved. The spacer layers 41f and the insulating layer 40 may be bonded to each other, and the spacer layers 41f and the back electrode 221 may be bonded to each other.

The ECM pertaining to the fifth embodiment is manufactured as follows. The insulating layer 40 made of the fluorine-resin film is formed on the gap space side of the vibration electrode 10. Next, the fluorine-resin film 21 is adhered to the back electrode 22, and the spacer layers 41f made of the fluorine-resin film where the hollow portion 411 is installed is laminated on and integrated with the fluorine-resin film 21. Next, the island-shaped silica regions 201 are formed on the fluorine-resin film 21 at the positions of the hollow portions 411, and the charging process is performed by the corona-discharge. Next, the vibration electrode 10 is overlapped thereon, and the spacer layers 41f made of the fluorine-resin film is heated and adhered, and the vibration electrode 10 and the back electrode 22 are adhered to each other so that the misalignment caused by deformation is protected.

When the spacer layers 41f are heated, a perforated metal plate that collides with the spacer layers 41f, or a metallic protrusion is pushed against the spacer layers 41f, and the metal plate or protrusion is heated. The insulating layer 40 of the vibration electrode 10 is pushed against the spacer layers 41f adhered or deposited by melting by this process, and the insulating layer 40 is adhered to the spacer layers 41f. When the insulating layer 40 is adhered to the spacer layers 41f, the insulating layer 40 and the spacer layers 41f are required to be heated to a temperature of about 310 to 400 degrees Celsius. Thus, there is a fear that the periphery of the spacer layers 41f also arrives at the temperature close to 300 degrees Celsius. However, when the island-shaped silica region 201 is made into the electret, the charge retaintivity at high temperature is improved. Thus, it is possible to manufacture the flexible ECM that can endure the adhering process at high temperature. By the way, without inserting the spacer layers 41f, the perforated metal plate or metallic protrusion is pushed against a localized site of the fluorine-resin film 21 in which the island-shaped silica region 201 is not formed, and the localized site is heated and adhered or deposited by melting. Then, the insulating layer 40 of the vibration electrode 10 is pushed against the adhered or deposited portion, and the insulating layer 40 may be adhered to the fluorine-resin film 21.

The ECM pertaining to the fifth embodiment can be manufactured to a very thin thickness. For example, in a case that the PFA film having a thickness of 12.5 micrometers is used for the fluorine-resin film 21 and the insulating layer 40, the height of the island-shaped silica region 201 is set to 25 micrometers, and each of the vibration electrode 10 and the back electrode 221 is formed as an aluminum deposition layer, a film-shaped sensor having a thickness of about 50 micrometers is manufactured. Since this has an easily foldable thickness, the film-shaped sensor of a large area can be folded and miniaturized similarly to that illustrated in Fig. 20. In this case, the electrostatic capacitance of the sensor can be dramatically increased, which can ignore the influence of parasitic capacitance of a circuit. For this reason, the amplifier (FET) 13 illustrated in Fig. 16 and the like can be installed separately from the film-shaped sensor pertaining to the fifth embodiment, or an electric signal can be directly obtained without using the amplifier (FET) 13.

By the way, PTL 4 previously proposed by the present inventor describes a mechanical-electrical conversion element that can be used as an ultrasonic probe because the mechanical-electrical conversion element has an extremely narrow gap defined by a diameter of particle of insulator. The mechanical-electrical conversion element described in PTL 4 differs from the ECM pertaining to the fifth embodiment in that the particles of insulator arranged in the gap space defined between an electret layer and an insulating layer serves as spacers in the gap space in PTL 4. That is, a technical idea such that negative charges are selectively deposited on the particles of insulator as the ECM pertaining to the fifth embodiment, and that the particles of insulator on which the negative charges are deposited are is used as the component of the electret-structure is neither disclosed nor suggested in the invention described in PTL 4. However, by using a method similar to the mechanical-electrical conversion element described in PTL 4, the ECM pertaining to the fifth embodiment can be also applied to ultrasonic probes and the like other than microphones. That is, the ECM pertaining to the fifth embodiment, since having the extremely narrow gap space defined by the spacer layers 41f and the island-shaped silica region 201, can be also used as the ultrasonic probes.

The static-induction conversion element (ECM) pertaining to the fifth embodiment of the present invention perfectly differs from the mechanical-electrical conversion element described in PTL 4 in that the island-shaped silica regions 201 which doubly serve as the spacers in the gap space is made into the electret. However, they are similar to each other in having the narrow gap space. Thus, the ECM pertaining to the fifth embodiment can be used as the ultrasonic probe, similarly to the mechanical-electrical conversion element described in PTL 4. In the static-induction conversion element (ECM) pertaining to the fifth embodiment, since the negative charges are captured by deep trap levels of the island-shaped silica regions 201, the charge retaintivity at high temperature is excellent. Thus, it is possible to manufacture the ultrasonic probe that can endure the reflow-temperature. Also, the negative charges deposited on the island-shaped silica regions 201 of the ultrasonic probe never diffuse into the insulating layer 40, even if the island-shaped silica regions 201 collides with the insulating layer 40. Hence, the static-induction conversion element (ECM) pertaining to the fifth embodiment is superior in pressure resistance characteristics, similarly to the mechanical-electrical conversion element described in PTL 4.

According to the electret-structure 1d of the fifth embodiment, even if the electret-structure 1 is exposed to the reflow temperature of the Pb-free solder, the high charge retaintivity r can be kept. For this reason, the static-induction conversion element pertaining to the fifth embodiment that has the electret-structure 1d pertaining to the fifth embodiment can be mounted on the substrate by the reflow-process which uses the Pb-free solder. Also, in the electret-structure 1d pertaining to the fifth embodiment, the negative charges are trapped in the deep levels of the island-shaped silica regions 201. Thus, even if the insulating layer 40 on the side of the vibration electrode 10 is brought into strong collision with the island-shaped silica regions 201, the negative charges do not diffuse into the insulating layer 40, and the high charge retaintivity r can be kept. For this reason, the static-induction conversion element that has the electret-structure 1d pertaining to the fifth embodiment can correspond to even the great displacement in such a way that the insulating layer 40 on the side of the vibration electrode 10 collides with the island-shaped silica regions 201. Hence, the maximum allowable displacement of the static-induction conversion element is improved by using the electret-structure 1d pertaining to the fifth embodiment.

Also, the static-induction conversion element pertaining to the fifth embodiment is excellent in the pressure resistance characteristics. Thus, by increasing the thickness of the vibration electrode 10 and further converting an inertia force of the vibration electrode 10, which results from its vibration, into an electric signal, the static-induction conversion element pertaining to the fifth embodiment can be used as the acceleration sensor. Since the acceleration sensor pertaining to the fifth embodiment is foldable, this acceleration sensor can be easily pasted to and used on even a complicated surface, such as a curved surface and the like, where it was difficult to install a conventional acceleration sensor. Also, the static-induction conversion element pertaining to the fifth embodiment can be easily manufactured to a large area in a configuration illustrated in Fig. 23. For example, the use as a low cost planar speaker is considered. Since the static-induction conversion element pertaining to the fifth embodiment can be folded in four, it is easy to carry and take the static-induction conversion element along. Also, when the surface protection layer of the static-induction conversion element can be used as a surface to be printed, the static-induction conversion element can be used as a poster. That is, the static-induction conversion element pertaining to the fifth embodiment can be used as a flexible speaker which jointly has a high directionality that is the feature of the planar speaker, a high designing capability and feasibility that a surface is printable, and a high portability that a folding action and a pasting action are easy.

(OTHER EMBODIMENTS)

As mentioned above, the present invention has been described by explaining the first to fifth embodiments. However, the discussions and drawings that constitute a part of this disclosure should not be understood to limit the present invention. From this disclosure, the various implementations, variations, embodiments and operational techniques may be evident for one skilled in the art.

For example, the configuration of the first variation of the first embodiment illustrated in Fig. 15(a) or the second variation of the first embodiment illustrated in Fig. 15(b) may be adapted for the electret-structure 1(c) pertaining to the third variation of the first embodiment illustrated in Fig. 16. Even in a case of an adaptation to the electret-structure 1c pertaining to the third variation of the first embodiment, if a covering film for covering the surface of the fluorine-resin film 21, on which the island-shaped silica regions 201 are deployed, is provided so that the covering film can be adhered on the upper surfaces of the island-shaped silica regions 201 and the surface of the fluorine-resin film 21 exposed between the island-shaped silica regions 201, a strong electrostatic force is established through the fluorine-resin film 21 between the vibration electrode 10 and the island-shaped silica regions 201, on which the negative charges are deposited, in the electret-structure 1. Thus, it is possible to design a configuration in which there is no fear that the vibration in the daily life or the impact such as the falling accident causes the island-shaped silica regions 201 to be disengaged from the fluorine-resin film 21. Irrespectively of the foregoing design, in a case that the impact having the anxiety of the disengagement of the island-shaped silica regions 201 is applied, it is possible to protect the disengagement, by laminating the covering film 301, such as fluorine resin and the like, on the fluorine-resin film 21 on which the silica layer 20 is formed.

Similarly, the smoothing process for the surface of the back electrode 22 of the electret-structure 1 pertaining to the first embodiment as mentioned above may be adapted for the electret-structure 1c pertaining to the third variation of the first embodiment illustrated in Fig. 16. In the electret-structure 1c pertaining to the third variation of the first embodiment illustrated in Fig. 16, the smoothing process may be performed on the surface of the vibration electrode 10 formed on one of the surfaces of the fluorine-resin film 21. When the surface of the vibration electrode 10 is rough, the adhesiveness of the interface between the vibration electrode 10 and the fluorine-resin film 21 is reduced, which involves the local electric field concentration. Since the local electric field concentration causes holes to be easily injected into the fluorine-resin film 21 from the vibration electrode 10, the charge retaintivity of the electret-structure is decreased. Thus, by smoothing the surface of the vibration electrode 10, it is possible to suppress a phenomenon that the local electric field concentration causes holes from being injected into the fluorine-resin film 21 from the vibration electrode 10.

Similarly, the process for the insulating layer coating on the surface of the back electrode 22 of the electret-structure 1 pertaining to the first embodiment as mentioned above may be adapted for the electret-structure 1c pertaining to the third variation of the first embodiment illustrated in Fig. 16. In the electret-structure 1 pertaining to the third variation of the first embodiment in Fig. 16, the surface of the vibration electrode 10 formed on one of the surfaces of the fluorine-resin film 21 may be covered with the insulating layer that is high in the heat resistance characteristics and excellent in the adhesiveness. By coating the insulating layer, which is excellent in the adhesiveness, on the vibration electrode 10 that implements the electret-structure 1, it is possible to reduce the interfacial defects between the vibration electrode 10 and the fluorine-resin film 21. Thus, it is possible to suppress the phenomenon that the interfacial defects causes holes from being injected into the fluorine-resin film 21 from the vibration electrode 10.

In this way, the present invention may naturally include various embodiments not described herein. Therefore, the technical scope of the present invention should be defined only by subject matters for specifying the invention prescribed by appended claims, which can be regarded appropriate according to the above description.

**INDUSTRIAL APPLICABILITY**

The reflow-process of the Pb-free solder can be performed on the electret-structure in the present invention. Also, the electret-structure can be used in the technical fields such as ECMs, ultrasonic sensors, acceleration sensors, earthquake gauges, electric-power generation-elements, speakers, earphones and the like in which the electret-structure is assembled. Thus, it is possible to greatly improve the manufacturing architectures in those technical fields.

[Reference Signs List]

| | |
|---|---|
| 1, 1a, 1b, 1c, 1d, 1p ⋯ | Electret-structure |
| 10 | Vibration Electrode |
| 11 | Electret Film |
| 12 | Back Electrode |
| 13 | FET |
| 14 | Spacer Ring |
| 15 | Metal Case |
| 16a, 16 | Hole |
| 20 | Silica Layer |

| 21 | Fluorine Resin Film |
| 22 | Back Electrode |
| 30 | Spray Nozzle |
| 31 | Mask |
| 40 | Insulating Layer |
| 41f | Spacer Layer |
| 51 | Back Electrode Side Extraction Electrode |
| 52, 53 | Double-Faced Tape |
| 54 | Vibration Electrode Side Extraction Electrode |
| 61 | Aluminum Plate |
| 62 | Vibration Generation Point |
| 63 | Acceleration Sensor |
| 64 | Conversion Element |
| 66 | Oscilloscope |
| 201 | Island-shaped Silica Region |
| 201r | Mist |
| 221 | Back Electrode |
| 411 | Hollow Portion |
| 63 | Acceleration Sensor |

**Claims**

1. An electret-structure comprising:

   a fluorine-resin film; and
   an electrode formed on one surface of the fluorine-resin film; **characterized by** further comprising

   a silica layer formed on another surface of the fluorine-resin film,
   wherein the silica layer is implemented by a plurality of island-shaped silica regions for covering the fluorine-resin film in a topology such that the island-shaped silica regions are isolated from each other, and negative charges are deposited on the island-shaped silica regions.

2. The electret-structure of claim 1, wherein the fluorine-resin film includes at least one of poly-tetra-fluoro-ethylene (PTFE), per-fluolo-alkoxy ethylene copolymer (PFA), tetra-fluoro-ethylene-hexa-fluoro-propylene copolymer (FEP) and poly-chloro-trifluoro-ethylene (PCTFE).

3. The electret-structure of claim 2, wherein a coverage of a cover area covered by all of the island-shaped silica regions to a surface area of the fluorine-resin film is 5 % or more and 90 % or less, and
   a product of the cover area covered by one of the island-shaped silica regions and the coverage is 0.5 mm$^2$ or less.

4. The electret-structure of claim 3, wherein an interval between the island-shaped silica regions is 100 nanometers or more.

5. The electret-structure of claim 4, wherein the island-shaped silica region is implemented by silica-aggregate of amorphous silica particles.

6. The electret-structure of claim 4, wherein the island-shaped silica region is implemented by thin film of amorphous silica or polycrystalline silica.

7. The electret-structure of claim 6, wherein the thin film is porous film.

8. The electret-structure of claim 1, further comprising a covering film for covering an upper surface of the fluorine-resin film on which the silica layer is formed, wherein the covering film is adhered on the upper surface of the island-shaped silica regions and the upper surface of the fluorine-resin film between the island-shaped silica regions.

9. The electret-structure of claim 1, wherein a smoothing process is performed on a surface of the electrode formed on the one surface of the fluorine-resin film.

10. The electret-structure of claim 1, wherein a surface of the electrode formed on the one surface of the fluorine-resin film is covered with an insulating layer.

11. A method for manufacturing an electret-structure having a fluorine-resin film, an electrode formed on one surface of the fluorine-resin film, and a silica layer formed on another surface of the fluorine-resin film, **characterized by** comprising:

    spraying silica sol, in which particles of amorphous silica are dispersed in solvent, onto the another surface of the fluorine-resin film so as to form a plurality of insulating layers arranged on the another surface in a topology such that the plurality of island-shaped silica regions are isolated from each other, and consequently forming the silica layer implemented by the plurality of island-shaped silica regions, and
    depositing negative charges on the island-shaped silica regions.

12. The method for manufacturing the electret-structure of claim 11, wherein a mask for defining a shape of the island-shaped silica regions is arranged above the fluorine-resin film, and through the mask, the silica sol is sprayed onto the fluorine-resin film.

13. The method for manufacturing the electret-structure of claim 12, wherein a spray nozzle for spraying the silica sol and the mask made of metal are set to negative potentials, respectively, and the electrode formed on the one surface of the fluorine-resin film is set to a positive potential, and the silica sol is then sprayed onto the fluorine-resin film.

14. The method for manufacturing the electret-structure of claim 1, wherein silica sol in which particles of amorphous silica are dispersed in solvent is coated on the fluorine-resin film by screen print, and the island-shaped silica regions are consequently formed.

15. The method for manufacturing the electret-structure of any one of claim 11or 14, wherein the electret-structure in which the island-shaped silica regions are formed on the fluorine-resin film is heated.

**Patentansprüche**

1. Elektretstruktur, aufweisend;
   einen Fluorkunstharzfilm; und
   eine Elektrode, die auf einer Seite des Fluorkunstharzfilms gebildet ist, **dadurch gekennzeichnet, dass** sie ferner aufweist:

   eine Siliziumoxidschicht, die an einer anderen Seite des Fluorkunstharzfilms ausgebildet ist,
   wobei die Siliziumoxidschicht durch mehrere Siliziumbereiche zum Abdecken des Fluorkunstharzfilms in einer Topologie durchgeführt ist, so dass die inselförmigen Siliziumbereiche voneinander getrennt sind, und negative Ladungen auf den inselförmigen Siliziumoxidbereichen abgeschieden werden.

2. Elektretstruktur nach Anspruch 1, wobei der Fluorkunstharzfilm mindestens Polytetrafluorethylen (PTFE), Perfluoralkoxyethylen-Copolymer (PFA), Tetrafluorethylen-Hexafluorpropylen-Copolymer (FEP) und/oder Polychlortrifluorethylen (PCTFE) enthält.

3. Elektretstruktur nach Anspruch 2, wobei eine Bedeckung eines Abdeckungsgebiets, das durch sämtliche der inselförmigen Siliziumoxidbereiche gegenüber einer Oberflächengröße des Fluorkunstharzfilms bedeckt wird, 5 % oder mehr und 90 % oder weniger beträgt, und
   ein Produkt des Abdeckungsgebiets, das durch einen der inselförmigen Siliziumoxidbereiche abgedeckt wird, und der Bedeckung 0,5 mm$^2$ oder weniger beträgt.

4. Elektretstruktur nach Anspruch 3, wobei ein Intervall zwischen den inselförmigen Siliziumoxidbereichen 100 Nanometer oder mehr beträgt.

5. Elektretstruktur nach Anspruch 4, wobei der inselförmige Siliziumbereich durch ein SiliziumoxidAggregat aus amorphen Silikapartikeln durchgeführt ist.

6. Elektretstruktur nach Anspruch 4, wobei das inselförmige Siliziumoxidgebiet durch einen dünnen Film von amorphem Siliziumoxid oder polykristallinem Siliziumoxid durchgeführt ist.

7.  Elektretstruktur nach Anspruch 6, wobei der dünne Film ein poröser Film ist.

8.  Elektretstruktur nach Anspruch 1, ferner mit einem Deckfilm zum Abdecken einer Oberseite des Fluorkunstharzfilms, auf dem die Siliziumoxidschicht gebildet ist, wobei der Deckfilm an der Oberseite der inselförmigen Siliziumoxidbereiche und an der Oberseite des Fluorkunstharzfilms zwischen den inselförmigen Siliziumoxidbereichen haftet.

9.  Elektretstruktur nach Anspruch 1, wobei an einer Fläche der Elektrode, die auf der einen Seite des Fluorkunstharzfilms ausgebildet ist, ein Glättungsvorgang durchgeführt wird.

10. Elektretstruktur nach Anspruch 1, wobei eine Fläche der Elektrode, die auf der einen Seite des Fluorkunstharzfilms ausgebildet ist, mit einer Isolierschicht bedeckt ist.

11. Verfahren zur Herstellung einer Elektretstruktur, die einen Fluorkunstharzfilm, eine Elektrode, die auf einer Seite des Fluorkunstharzfilms gebildet ist, und eine Siliziumoxidschicht aufweist, die an einer weiteren Fläche des Fluorkunstharzfilms gebildet ist, **gekennzeichnet durch** folgende Schritte:

    Sprühen von Kieselsole, in der Partikel von amorphem Siliziumoxid in Lösung verteilt sind, auf die andere Seite des Fluorkunstharzfilms, um mehrere Isolierschichten zu bilden, die auf der anderen Seite in einer Topologie angeordnet sind, so dass die mehreren inselförmigen Siliziumbereiche voneinander getrennt sind, und folglich Bilden der Siliziumoxidschicht, die **durch** die mehreren inselförmigen Siliziumbereiche durchgeführt ist, und Abscheiden negativer Ladungen auf den inselförmigen Siliziumoxidbereichen.

12. Verfahren zur Herstellung der Elektretstruktur nach Anspruch 11, wobei eine Maske zum Definieren einer Gestalt der inselförmigen Siliziumoxidbereiche oberhalb des Fluorkunstharzfilms angeordnet wird, und die Kieselsole durch die Maske auf den Fluorkunstharzfilm gesprüht wird.

13. Verfahren zur Herstellung der Elektretstruktur nach Anspruch 12, wobei eine Sprühdüse zum Sprühen der Kieselsole bzw. die Maske, die aus Metall hergestellt ist, auf negative Potentiale gesetzt werden, und die Elektrode, die auf der einen Seite des Fluorkunstharzfilms gebildet ist, auf ein positives Potential gesetzt wird, und die Kieselsole anschließend auf den Fluorkunstharzfilm gesprüht wird.

14. Verfahren zur Herstellung der Elektretstruktur nach Anspruch 1, wobei Kieselsole, in der Partikel von amorphem Siliziumoxid in Lösung verteilt sind, auf dem Fluorkunstharzfilm mittels Siebdruck aufgebracht wird, und folglich die inselförmigen Siliziumbereiche gebildet werden.

15. Verfahren zur Herstellung der Elektretstruktur nach einem beliebigen der Ansprüche 11 oder 14, wobei die Elektretstruktur, in der die inselförmigen Siliziumoxidbereiche auf dem Fluorkunstharzfilm gebildet sind, erwärmt wird.

## Revendications

1.  Structure à électret comprenant :

    un film de résine fluorée ; et
    une électrode formée sur une première surface du film de résine fluorée ;

    **caractérisée en ce qu'**elle comprend en outre
    une couche de silice formée sur une autre surface du film de résine fluorée,
    dans laquelle la couche de silice est mise en oeuvre au moyen d'une pluralité de régions de silice en forme d'îlots destinées à recouvrir le film de résine fluorée dans une topologie telle que les régions de silice en forme d'îlots sont isolées les unes des autres, et des charges négatives sont déposées sur les régions de silice en forme d'îlots.

2.  Structure à électret selon la revendication 1, dans laquelle le film de résine fluorée comprend au moins soit du polytétrafluoroéthylène (PTFE), soit un copolymère perfluoroalcoxyéthylène (PFA), soit un copolymère tétrafluoroéthylène-hexafluoroéthylène (FEP), soit du polychlorotrifluoroéthylène (PCTFE).

3. Structure à électret selon la revendication 2, dans laquelle la couverture de la zone de protection couverte par toutes les régions de silice en forme d'îlots par rapport à la surface du film de résine fluorée est supérieure ou égale à 5 % et inférieure ou égale à 90 %, et
le produit de la zone de protection couverte par une des régions de silice en forme d'îlots et de la couverture est inférieur ou égal à 0,5 mm$^2$.

4. Structure à électret selon la revendication 3, dans laquelle l'intervalle entre les régions de silice en forme d'îlots est supérieur ou égal à 100 nanomètres.

5. Structure à électret selon la revendication 4, dans laquelle les régions de silice en forme d'îlots sont mises en oeuvre au moyen d'un agrégat de silice constitué de particules de silice amorphe.

6. Structure à électret selon la revendication 4, dans laquelle la région de silice en forme d'îlot est mise en oeuvre au moyen d'un film mince de silice amorphe ou de silice polycristalline.

7. Structure à électret selon la revendication 6, dans laquelle le film mince est un film poreux.

8. Structure à électret selon la revendication 1, comprenant en outre un film de protection destiné à recouvrir une surface supérieure du film de résine fluorée sur laquelle est formée la couche de silice, dans laquelle le film de protection est collé sur la surface supérieure des régions de silice en forme d'îlots et sur la surface supérieure du film de résine fluorée entre les régions de silice en forme d'îlots.

9. Structure à électret selon la revendication 1, dans laquelle un procédé de lissage est effectué sur une surface de l'électrode formée sur la première surface du film de résine fluorée.

10. Structure à électret selon la revendication 1, dans laquelle une surface de l'électrode formée sur la première surface du film de résine fluorée est recouverte d'une couche isolante.

11. Procédé de fabrication d'une structure à électret comportant un film de résine fluorée, une électrode formée sur une première surface du film de résine fluorée, et une couche de silice formée sur une autre surface du film de résine fluorée, **caractérisé en ce qu'**il comprend :

   la pulvérisation d'un sol de silice, dans lequel des particules de silice amorphe sont dispersées dans un solvant, sur l'autre surface du film de résine fluorée de manière à former une pluralité de couches isolantes agencées sur l'autre surface dans une topologie telle que la pluralité de régions de silice en forme d'îlots sont isolées les unes des autres, et la formation, ainsi, de la couche de silice mise en oeuvre par la pluralité de régions de silice en forme d'îlots, et
   le dépôt de charges négatives sur les régions de silice en forme d'îlots.

12. Procédé de fabrication de la structure à électret selon la revendication 11, dans lequel un masque destiné à définir la forme des régions de silice en forme d'îlots est agencé au-dessus du film de résine fluorée, et au travers du masque, le sol de silice est pulvérisé sur le film de résine fluorée.

13. Procédé de fabrication de la structure à électret selon la revendication 12, dans lequel une buse de pulvérisation permettant de pulvériser le sol de silice et le masque de métal sont réglés sur des potentiels négatifs, respectivement, et l'électrode formée sur la première surface du film de résine fluorée est réglée sur un potentiel positif, et le sol de silice est ensuite pulvérisé sur le film de résine fluorée.

14. Procédé de fabrication de la structure à électret selon la revendication 1, dans lequel un sol de silice dans lequel des particules de silice amorphe sont dispersées dans un solvant est appliqué sur le film de résine fluorée par sérigraphie, et les régions de silice en forme d'îlots sont ainsi formées.

15. Procédé de fabrication de la structure à électret selon l'une quelconque des revendications 11 ou 14, dans lequel la structure à électret dans laquelle les régions de silice en forme d'îlots sont formées sur le film de résine fluorée est chauffée.

# FIG. 1

FIG. 2A

Sample N, Sample $U_0$ — 21

FIG. 2B

Sample $U_1$, Sample $U_2$ — 21

201, 201, 201, 201, 201, 201, 201

FIG. 2C

Sample I — 21

201, 201, 201, 201, 201, 201, 201, 201

FIG. 3A

FIG. 3B

FIG. 4A

FIG. 4B

# FIG. 5

# FIG. 6

$y = -0.1814x + 1$

CHARGE RETAINTIVITY
AGAINST NON-COATED MATERIAL [%]

$R_sA_s [mm^2]$

# FIG. 7A

○ NON-COATED MATERIAL (same condition as sample N)
△ COATED MATERIAL (same condition as sample I)
□ COATED MATERIAL (same condition as sample I + pre-anneal at 250°C)

# FIG. 7B

# FIG. 8

# FIG. 9

# FIG. 10

# FIG. 11

# FIG. 12

coating of silica-aggregate by inkjet (same condition as sample I)
△ A (without anneal)
□ B (re-charging of the sample A)
○ C (charging at 250°C)

# FIG. 13

# FIG. 14

# FIG. 15A

# FIG. 15B

# FIG. 16

# FIG. 17

# FIG. 18

# FIG. 19

EP 2 840 581 B1

# FIG. 20A

FOLD LINE

40mm

# FIG. 20B

40mm

20mm

FOLD LINE

# FIG. 20C

20mm

20mm

# FIG. 21

OSCILLOSCOPE ~66

CHARGE AMPLIFIER
1mV/pC ~65

SENSOR ~63

CONVERSION
ELEMENT ~64

~61

transmission

62

aluminum plate, 300 × 400mm, t=2mm

# FIG. 22

EP 2 840 581 B1

# FIG. 23

EP 2 840 581 B1

# FIG. 24

# FIG. 25

# FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006287279 A
- JP 2009253050 A
- JP 2002033241 A
- WO 2009125773 A1
- US 20080258565 A